(19) **Europäisches Patentamt**
**European Patent Office**
**Office européen des brevets**

(11) **EP 4 169 226 B1**

(12) **FASCICULE DE BREVET EUROPEEN**

(45) Date de publication et mention de la délivrance du brevet:
**25.02.2026 Bulletin 2026/09**

(21) Numéro de dépôt: **21740600.8**

(22) Date de dépôt: **18.06.2021**

(51) Classification Internationale des Brevets (IPC):
***H04L 9/40*** *(2022.01)*     ***H04W 12/121*** *(2021.01)*

(52) Classification Coopérative des Brevets (CPC):
**H04L 63/1433; H04W 12/121**

(86) Numéro de dépôt international:
**PCT/FR2021/051109**

(87) Numéro de publication internationale:
**WO 2021/255400 (23.12.2021 Gazette 2021/51)**

(54) **SURVEILLANCE D'AU MOINS UNE TRANCHE D'UN RESEAU DE COMMUNICATIONS UTILISANT UN INDICE DE CONFIANCE ATTRIBUE A LA TRANCHE DU RESEAU**

**ÜBERWACHUNG VON MINDESTENS EINEM ABSCHNITT EINES KOMMUNIKATIONSNETZWERKS UNTER VERWENDUNG EINES DEM ABSCHNITT DES NETZWERKS ZUGEWIESENEN KONFIDENZINDEX**

**MONITORING OF AT LEAST ONE SECTION OF A COMMUNICATIONS NETWORK USING A CONFIDENCE INDEX ASSIGNED TO THE SECTION OF THE NETWORK**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2020 FR 2006453**
           **19.06.2020 FR 2006454**

(43) Date de publication de la demande:
**26.04.2023 Bulletin 2023/17**

(73) Titulaire: **Orange**
**92130 Issy-les-Moulineaux (FR)**

(72) Inventeur: **SEDJELMACI, Hichem**
**92326 Châtillon Cedex (FR)**

(56) Documents cités:
**WO-A1-2019/115173**     **CN-B- 105 516 177**
**US-A1- 2005 039 047**

- **LIU YICEN ET AL: "A Dynamic Composition Mechanism of Security Service Chaining Oriented to SDN/NFV-Enabled Networks", IEEE ACCESS, vol. 6, 17 September 2018 (2018-09-17), pages 53918 - 53929, XP011692976, DOI: 10.1109/ ACCESS.2018.2870601**

## Description

## Technique antérieure

L'invention se rapporte au domaine général des télécommunications et plus particulièrement à la sécurité des réseaux de communications et la protection de ces derniers contre des attaques informatiques aussi communément appelées cyber-attaques.

Elle a une application privilégiée mais non limitative dans le contexte des réseaux 5G (5ème Génération), et notamment des réseaux sans fil 5G s'appuyant sur des architectures mettant en œuvre une technique de découpage de réseaux en tranches, plus communément appelée « network slicing » en anglais.

L'architecture des réseaux de télécommunications sans fil actuellement déployés ou en cours de déploiement est définie par le groupe de standardisation connu sous le nom de 3GPP (Third Generation Partnership Project). C'est le cas notamment des réseaux sans fil dits de deuxième génération (« 2G ou GSM»), de troisième génération (« 3G »), et de quatrième génération (« 4G »).

Jusqu'à la quatrième génération, les architectures de réseau définies par le groupe 3GPP reposent le plus souvent sur des équipements spécifiques, dédiés à des fonctionnalités précises, que ce soit au niveau du réseau d'accès ou du cœur de réseau, notamment en ce qui concerne la transmission de paquets depuis ou à destination d'un terminal mobile.

Le manque de flexibilité et d'évolutivité inhérent à ce type d'architecture a conduit le groupe 3GPP à envisager l'adoption d'architectures plus flexibles pour la prochaine génération de réseaux sans fil dite « 5G », afin de pouvoir répondre rapidement à des demandes extrêmement diverses en termes de trafic et/ou de qualité de service envisagées par les réseaux 5G (Internet des Objets (ou IoT pour « Internet Of Things »), accès large bande dans des réseaux denses, etc.). Il est à noter que les réseaux 5G ont vocation à concerner aussi bien les réseaux mobiles que les réseaux fixes.

Parmi les solutions envisagées, une des solutions les plus prometteuses repose sur une technique de découpage par tranches du réseau ou « network slicing ». Cette technique est décrite notamment dans la spécification technique 3GPP TS 23.501 v15.7.0, septembre 2019. Elle permet à l'opérateur d'un réseau de créer des réseaux logiques de bout-en-bout sur mesure et indépendants pour ses clients, à partir d'une même infrastructure de réseau physique (réseau(x) d'accès, réseau cœur, etc.), capables de fournir des solutions optimisées pour des scénarii variés correspondant à des contraintes diverses en termes de fonctionnalités, de performances et de qualités de service.

Plus spécifiquement, le concept de tranches de réseau permet de créer plusieurs instances de réseau aussi appelées « network slices » en anglais. Une tranche de réseau est composée de fonctions réseaux, de ressources matérielles (par exemple de stockage et de calcul, d'accès, etc.) et de configurations permettant de satisfaire les exigences liées aux services, aux clients et/ou terminaux rattachés à cette tranche.

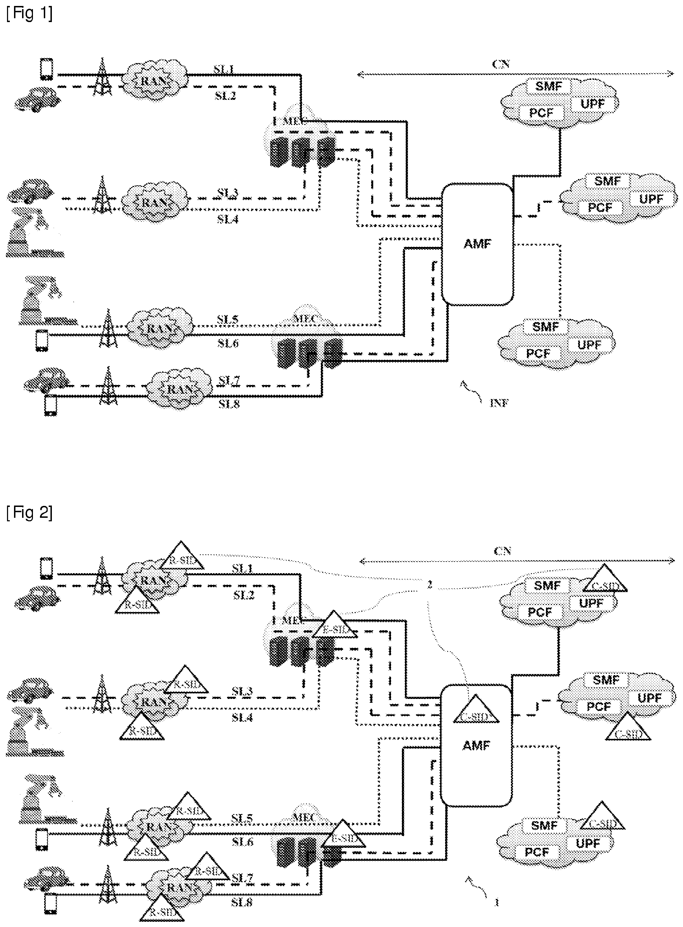

A titre illustratif, la **figure 1** représente une vue simplifiée d'une infrastructure de communications INF comprenant huit tranches de réseau SL1, SL2, ...,SL8 représentant chacune un réseau sans fil, les tranches de réseau se partageant des infrastructures de réseaux d'accès RAN (pour « Radio Access Network »), des infrastructures de réseaux de périphérie MEC (pour « Multiple-Access Edge Computing »), ainsi que des fonctions réseau virtuelles ou des groupes de fonctions réseau virtuelles mises en œuvre dans le réseau cœur CN. De telles fonctions réseaux virtuelles sont par exemple des fonctions de routage, d'adressage, de contrôle de flux de données, de nommage, etc. Dans l'exemple de la figure 1, les tranches de réseau SL1 à SL8 partagent à titre illustratif des fonctions du réseau cœur CN comprenant notamment des fonctions de gestion de l'accès et de la mobilité AMF (pour « Access and Mobility Management Function »), de gestion de sessions SMF (pour « Session Management Function »), de plan utilisateur UPF (pour « User Plane Function »), et de gestion de politique de flux PCF (pour « Policy Charging Function »).

Les différentes tranches de réseau SL1,...,SL8 peuvent donnent accès à des réseaux de données distincts ou à un même réseau de données. Chaque tranche de réseau peut être apparentée à un réseau sans fil distinct, et est déterminée par les caractéristiques des flux de données transitant par cette tranche de réseau, qui présentent des points communs en termes par exemple de destination, d'acheminement, et de contraintes de sécurité, justifiant une gestion commune au sein d'une même tranche de réseau. Chacune des tranches est ainsi optimisée pour les besoins d'un type de service et/ou d'un type de client et/ou de terminaux. Un même terminal peut être connecté à des tranches de réseau distinctes.

Dans ce contexte de « network slicing », les réseaux sans fil 5G, du fait notamment des techniques de communication avancées mises en œuvre et des capacités nouvelles offertes en matière notamment de débits, de volumes d'information et de connexion, ouvrent des perspectives d'usage inédites qui posent de véritables challenges en termes de cyber sécurité.

Le document WO2019115173A1 concerne le domaine de la cybersécurité des communications réseaux, et s'intéresse au contrôle de sondes permettant de détecter des intrusions dans un tel réseau. Le document de Y. Khettab et al., intitulé « Virtual Security as a Service for 5G Verticals », WCNC 2018, IEEE Wireless Communications and Networking Conference, propose une architecture qui exploite les notions de virtualisation des fonctions réseau et de réseau à définition logicielle (ou SDN pour « Software Defined Networking ») pour sécuriser une tranche de réseau à la demande. Cette architecture s'appuie sur le déploiement dynamique dans chaque tranche de réseau de plusieurs fonctions virtuelles incluant des services de détection d'intrusion (ou IDS pour « Intrusion Detection Service ») et d'inspection des paquets (ou DPI pour « Deep Packet Inspection »), la surveillance de leur performance, et l'adaptation dynamique du nombre de fonctions déployées tenant compte de politiques et de métriques prédéfinies.

L'architecture proposée dans ce document contribue ainsi à satisfaire les contraintes de flexibilité et d'élasticité imposées aux réseaux 5G en assurant une allocation optimale des ressources dédiées à sécuriser la tranche de réseau considérée. Toutefois, en raison notamment de la gestion individuelle de chaque fonction de sécurité IDS/DPI déployée, son efficacité en termes de sécurité en cas d'attaque informatique massive perpétrée contre le réseau peut s'avérer insuffisante (notamment en ce qui concerne le taux de faux négatifs détectés).

Il existe donc un besoin d'une architecture adaptée au découpage en tranches de réseau prôné notamment dans les réseaux 5G et offrant une meilleure sécurisation du réseau face à la menace de cyber-attaques.

**Exposé de l'invention**

L'invention est définie par les revendications indépendantes. Des modes de réalisation préférés sont définis par les revendications dépendantes.

L'invention répond notamment à ce besoin en proposant, selon un premier aspect, un système de surveillance d'au moins une tranche d'un réseau de communications utilisant au moins un réseau d'accès, un réseau de périphérie et un réseau cœur, ledit système comprenant, pour chaque tranche, une pluralité de modules de détection d'intrusions configurés pour surveiller des éléments associés à ladite tranche et comportant au moins un premier module de détection d'intrusions au niveau du réseau d'accès, un deuxième module de détection d'intrusions au niveau du réseau de périphérie, et au moins un troisième module au niveau du réseau cœur, chacun desdits modules étant configuré pour fournir une information représentative d'un niveau de confiance local attribué à ladite tranche en fonction d'un comportement d'au moins un élément qu'il surveille, un dit troisième module étant en outre configuré pour évaluer, à partir desdites informations fournies, un niveau de confiance global pour ladite tranche et à déclencher une action de mitigation d'une intrusion pour ladite tranche en fonction d'une valeur de ce niveau de confiance global.

Corrélativement, l'invention vise également un procédé de surveillance d'au moins une tranche d'un réseau de communications utilisant au moins un réseau d'accès, un réseau de périphérie et un réseau cœur, ledit procédé comprenant :

- une étape de surveillance de ladite tranche par une pluralité de modules de détection d'intrusions configurés pour surveiller des éléments associés à ladite tranche et comportant au moins un premier module de détection d'intrusions au niveau du réseau d'accès, un deuxième module de détection d'intrusions au niveau du réseau de périphérie, et au moins un troisième module au niveau du réseau cœur ;
- une étape de fourniture, par chacun desdits modules, d'une information représentative d'un niveau de confiance local attribué à ladite tranche en fonction d'un comportement d'au moins un élément surveillé par ledit module ;
- une étape d'évaluation, par un dit troisième module, à partir desdites informations fournies, d'un niveau de confiance global pour ladite tranche ; et
- une étape de déclenchement d'une action de mitigation d'une intrusion pour ladite tranche en fonction d'une valeur de ce niveau de confiance global.

Aucune limitation n'est attachée aux techniques de détection d'intrusions mises en œuvre par les différents modules de détection d'intrusions impliqués dans la mise en œuvre d'invention : il peut s'agir de simples techniques de détection d'anomalies s'appuyant sur des modèles de comportements normaux prédéfinis, de techniques s'appuyant sur des règles prédéfinies et/ou sur des signatures caractérisant divers attaques informatiques connues, de techniques d'apprentissage automatique (ou « Machine Learning »), supervisées ou non, de techniques de détection hybrides utilisant une combinaison des techniques précitées, etc. Aucune limitation n'est attachée non plus à la nature des intrusions susceptibles d'affecter le réseau : il peut s'agir d'intrusion de type déni de service distribué (ou DDoS pour « Distributed Denial of Service »), d'interférences dans les communications (ou « jamming »), etc.

L'invention propose ainsi une architecture s'appuyant sur le déploiement de plusieurs modules de détection d'intrusions à divers niveaux de chaque tranche de réseau (réseau d'accès, réseau de périphérie, réseau cœur), et sur la collaboration de ces modules de détection pour estimer un indice de confiance global pour chaque tranche de réseau, la valeur de cet indice de confiance global étant prise en compte pour déclencher si besoin une action de mitigation d'intrusions au niveau de ladite tranche.

Une telle action est par exemple, si la valeur du niveau de confiance global est inférieure à un seuil donné, une isolation de cette tranche du réseau et/ou une éviction d'au moins un élément du réseau d'accès, du réseau de périphérie et/ou du réseau cœur identifiés comme ciblés par une intrusion. Bien entendu, ces exemples d'actions de mitigation ne sont donnés qu'à titre illustratif et d'autres actions de mitigation peuvent être envisagées, en fonction notamment de la nature de l'intrusion détectée, de la valeur du niveau de confiance, de la gravité de l'intrusion, des informations d'anomalies remontées par les différents modules de détection d'intrusions, du ou des éléments ciblés par l'intrusion, etc.

En agissant ainsi de façon distribuée à différents niveaux de l'infrastructure réseau sur laquelle s'appuie chaque tranche de réseau, et grâce à la collaboration proposée entre les différents modules de détection, l'invention permet de limiter le taux de fausses détections (faux négatifs et/ou faux positifs) de chaque module de détection et d'améliorer la sécurité globale des tranches du réseau par rapport à l'état de la technique. La sécurisation de chaque tranche est en effet assurée de bout en bout du réseau, du terminal utilisateur jusqu'au réseau cœur : l'invention ne se contente pas de sécuriser le réseau d'accès ou le cœur de réseau, mais s'emploie à surveiller chaque partie du réseau pour chaque tranche considérée. Il en résulte une sécurité renforcée des différentes tranches de réseau.

En outre, l'évaluation d'un indice de confiance global pour la tranche permet de déterminer comment la tranche est affectée par la ou les intrusions détectées le cas échéant, et de déclencher une réponse adaptée. Cet indice de confiance global est avantageusement évalué dans la partie la plus sécurisée du réseau, à savoir dans le cœur du réseau, à partir d'informations collectées de façon distribuée dans le réseau sur différents segments du réseau. Il en résulte l'obtention d'un indice de confiance robuste et fiable.

Les modules de détection peuvent en outre être configurés avantageusement pour échanger entre eux des informations sur les intrusions qu'ils détectent dans la tranche de réseau, permettant les uns et les autres de bénéficier des détections réalisées par les autres modules de détection mais également de mettre à jour leurs connaissances sur ces intrusions. Cette collaboration « horizontale », au sein d'une même tranche, dans le sens montant (du réseau d'accès vers le réseau cœur) et/ou descendant (du réseau cœur vers le réseau d'accès) permet d'améliorer la précision et la rapidité d'exécution des détections réalisées par les modules de détection.

Dans un mode particulier de réalisation, la pluralité de modules de détection associée à ladite tranche comprend une pluralité de troisièmes modules associés respectivement à des fonctions réseau actives distinctes du réseau cœur.

Dans ce mode de réalisation, on déploie avantageusement un module de détection au niveau d'une pluralité de fonctions réseau assurées par le cœur de réseau et activées pour la tranche considérée (par exemple un module de détection par fonction réseau active). En effet, à un instant donné et pour un service donné, toutes les fonctions réseau présentes au niveau du cœur de réseau ne sont pas nécessairement activées. Ce mode de réalisation permet de protéger efficacement lesdites fonctions réseau actives et notamment les fonctions les plus critiques pour une tranche donnée, comme par exemple dans le contexte d'un réseau 5G, les fonctions AMF, UPF, et PCF évoquées précédemment.

En variante, on peut envisager qu'un même module de détection d'intrusions soit configuré pour surveiller simultanément plusieurs fonctions réseau actives.

Concernant les premier(s) et deuxième(s) modules, on peut par exemple envisager un module de détection d'intrusions déployé au niveau du réseau d'accès (et apte à surveiller les différentes entités de ce réseau d'accès ou connectées au réseau d'accès), et un module de détection d'intrusions déployé au niveau du réseau de périphérie (et apte à surveiller les différentes entités de ce réseau de périphérie). Bien entendu, une configuration avec davantage de premiers et deuxièmes modules peut être envisagée.

En outre, il convient de noter qu'un même module de détection, quelle que soit la partie du réseau au niveau de laquelle il est déployé, peut être utilisé pour surveiller plusieurs tranches de réseau simultanément.

Dans le mode de réalisation dans lequel une pluralité de troisièmes modules est déployés au niveau de diverses fonctions réseau actives du réseau cœur pour ladite tranche, le troisième module configuré pour évaluer le niveau de confiance global d'une tranche peut être sélectionné parmi ces troisièmes modules par exemple en fonction de sa proximité au(x) réseau(x) de périphérie et au(x) réseau(x) d'accès exploités par ladite tranche.

De cette sorte, on limite les risques d'attaques lors du transfert des informations entre les modules se trouvant au niveau du (ou des) réseau(x) d'accès et du (ou des) réseau(x) de périphérie et ce troisième module. Un tel module dans l'exemple d'un réseau 5G est par exemple un module de détection d'intrusions embarqué dans une fonction AMF ou PCF du réseau cœur.

Conformément à l'invention, l'indice global évalué pour une tranche est calculé à partir des indices locaux remontés par les premier(s), deuxième(s) et troisième(s) modules de détection. Dans un mode particulier de réalisation, le niveau de confiance global pour une tranche est par exemple une moyenne des niveaux de confiance locaux fournis par ladite pluralité de modules de détection.

Les niveaux de confiance locaux sont appréciés par les modules de détection distribués dans le réseau sur chaque tranche considérée, en fonction des anomalies qu'ils observent. On peut envisager différentes façons d'évaluer un tel niveau de confiance local.

Par exemple, dans un mode particulier de réalisation, au moins un niveau de confiance local est évalué par un dit module de détection pour une dite tranche comme un ratio entre une soustraction d'un nombre de comportements normaux dudit au moins un élément surveillé par ce module de détection et d'un nombre d'intrusions affectant ledit au moins un élément surveillé par ce module de détection détectées sur une période de temps donnée, par une somme desdits nombres.

Un tel niveau de confiance local est facile à évaluer par le module de détection en question, à partir de la surveillance qu'il opère au niveau où il est déployé. Toutefois, on peut envisager d'autres façons d'évaluer un niveau de confiance local pour la tranche. Par exemple, l'indice de confiance local peut être calculé à partir d'une somme pondérée des deux nombres précités, ou seulement l'un d'entre eux, etc.

Dans un mode particulier de réalisation, ledit premier module est configuré pour, sur détection d'une intrusion, signaler ladite intrusion détectée audit deuxième module et/ou à un dit premier module associé à une autre tranche utilisant ledit réseau d'accès.

Ce mode de réalisation propose une collaboration entre les modules de détection, sur un plan horizontal comme discuté auparavant, autrement dit, entre modules de détection déployés sur une même tranche de réseau, et/ou sur un plan vertical, c'est-à-dire entre modules de détection déployés au niveau de tranches de réseau différentes mais utilisant le même réseau d'accès. Il s'agit par là-même de faire bénéficier aux autres tranches du réseau utilisant la même infrastructure physique, des informations sur les intrusions détectées au niveau de cette infrastructure, par exemple les caractéristiques de ces intrusions (aussi appelées « features » en anglais) et les signatures de ces dernières (ou « patterns » en anglais), pour enrichir les connaissances des modules de détection associées à ces autres tranches. De cette sorte, on améliore la précision de détection et la réactivité des modules de détection face à une attaque déployée au niveau du réseau d'accès, et le cas échéant, l'efficacité des actions de mitigation mise en place en réponse à cette attaque.

La sécurité du réseau en est améliorée, et cela bénéficie aux différentes tranches du réseau utilisant le réseau d'accès considéré.

Dans un mode particulier de réalisation, le deuxième module est configuré pour, sur détection d'une intrusion, signaler ladite intrusion détectée audit au moins un troisième module et/ou déclencher une action de mitigation au niveau du réseau d'accès et/ou du réseau de périphérie.

Les informations sur les intrusions détectées sont ainsi remontées au réseau cœur, ce qui permet au réseau cœur d'avoir une visibilité globale sur les intrusions ciblant les éléments de la tranche de réseau.

En outre une action de mitigation peut être déclenchée rapidement au plus près des éléments ciblés par l'intrusion (i.e. au niveau du réseau d'accès et/ou du réseau de périphérie), et de lutter plus efficacement contre l'intrusion.

Chaque module de détection, quel que soit le segment du réseau au niveau duquel il est déployé, peut être configuré pour exécuter un certain nombre d'actions prédéterminées, à savoir la surveillance du segment du réseau sur lequel il est déployé bien entendu, mais également l'analyse en profondeur du trafic lorsqu'une intrusion est suspectée, la notification des autres modules de détection pour leur signaler la détection d'une intrusion, le déclenchement d'actions de mitigation, etc. Ces actions « logiques » sont configurables et peuvent varier en fonction du segment sur lequel est déployé le module en question (selon s'il s'agit d'un premier, deuxième ou troisième module au sens de l'invention), mais également en fonction d'autres facteurs, comme par exemple, la tranche de réseau sur lequel il est déployé et sa sensibilité en termes de sécurité, etc.

Par exemple, dans un mode particulier de réalisation, au moins un dit module de détection est configuré pour exécuter au moins une action parmi une action d'analyse en profondeur du trafic, une action de notification, et/ou une action de mitigation lorsqu'il détecte qu'une probabilité d'exécuter cette action est supérieure à un seuil déterminé.

Ce seuil peut être déterminé par des experts, être statique, varier en fonction des actions, etc.

En variante, il peut être déterminé dynamiquement pour et par ledit module de détection en fonction par exemple d'un nombre de fausses détections réalisées par celui-ci et au moyen par exemple d'un algorithme d'apprentissage automatique.

On note que la notion de fausse détection est appréciée ici par rapport à une validation des intrusions détectées réalisée au niveau du réseau cœur (par exemple par un troisième module au sens de l'invention).

Une telle adaptation dynamique du seuil permet de tenir compte avantageusement de l'environnement changeant des attaques informatiques, dans lequel les caractéristiques peuvent évoluer rapidement ou de nouvelles attaques apparaître, ainsi que les performances du module de détection. Bien entendu, l'adaptation du seuil peut être faite en fonction d'autres critères.

L'invention vise également un réseau de communications, configuré pour mettre en œuvre un découpage en tranches, ledit réseau de communications comprenant un système de surveillance selon l'invention pour surveiller au moins une tranche dudit réseau.

Le réseau bénéficie des mêmes avantages cités précédemment que le système de surveillance selon l'invention.

On peut également envisager, dans d'autres modes de réalisation, que le procédé de surveillance, le système de surveillance et le réseau selon l'invention présentent en combinaison tout ou partie des caractéristiques précitées.

Selon un deuxième aspect, l'invention propose un système de surveillance d'au moins une tranche d'un réseau de communications utilisant au moins un réseau d'accès, un réseau de périphérie et un réseau cœur, ledit système comprenant, pour chaque tranche, une pluralité de modules de détection d'intrusions configurés pour surveiller des éléments associés à ladite tranche et comportant au moins un premier module de détection d'intrusions au niveau du réseau d'accès, un deuxième module de détection d'intrusions au niveau du réseau de périphérie, et au moins un troisième module au niveau du réseau cœur, lesdits modules de détection étant en outre configurés pour échanger entre eux des informations sur des intrusions détectées affectant des éléments qu'ils surveillent, et au moins un dit module de détection étant configuré pour exécuter au moins une action parmi une action d'analyse en profondeur d'au moins une anomalie détectée sur un élément qu'il surveille, une action d'agrégation et/ou de corrélation d'informations reçues d'au moins un dit module de détection, une action de notification d'un dit module de détection d'une intrusion détectée, et/ou une action de mitigation d'une intrusion lorsqu'il détermine qu'une probabilité d'exécuter ladite action est supérieure à un seuil donné.

Corrélativement, l'invention vise également un procédé de surveillance d'au moins une tranche d'un réseau de communications utilisant au moins un réseau d'accès, un réseau de périphérie et un réseau cœur, ledit procédé comprenant :

- une étape de surveillance de ladite tranche par une pluralité de modules de détection d'intrusions configurés pour surveiller des éléments associés à ladite tranche et comportant au moins un premier module de détection d'intrusions au niveau du réseau d'accès, un deuxième module de détection d'intrusions au niveau du réseau de périphérie, et au moins un troisième module au niveau du réseau cœur, lesdits modules de détection étant en outre configurés pour échanger entre eux des informations sur des intrusions détectées affectant des éléments qu'ils surveillent ;
- une étape de détermination d'au moins une probabilité d'exécuter au moins une action parmi une action d'analyse en profondeur d'au moins une anomalie détectée sur un élément qu'il surveille, une action d'agrégation et/ou de corrélation d'informations reçues d'au moins un dit module de détection, une action de notification d'un dit module de détection d'une intrusion détectée, et/ou une action de mitigation d'une intrusion ; et
- une étape d'exécution de ladite action si ladite probabilité d'exécuter ladite action est supérieure à un seuil donné.

Les différents modules de détection d'intrusions impliqués dans la mise en œuvre d'invention peuvent mettre en œuvre différents types de techniques de détection d'intrusions. Par exemple, ils peuvent utiliser une technique simple de détection d'anomalies (s'appuyant par exemple sur un modèle de comportement normal) combinée à une technique de détection plus avancée d'analyse en profondeur des anomalies détectées le cas échéant, telle que par exemple une technique basées sur des règles prédéfinies et/ou sur des signatures caractérisant des attaques informatiques connues, une technique d'apprentissage automatique (ou « Machine Learning »), supervisée ou non, etc. On note qu'aucune limitation n'est attachée à la nature des intrusions susceptibles d'affecter le réseau : il peut s'agir d'intrusion de type déni de service distribué (ou DDoS pour « Distributed Denial of Service »), d'interférences dans les communications (ou « jamming »), etc.

L'invention propose ainsi, selon ce deuxième aspect, une architecture distribuée s'appuyant sur le déploiement de plusieurs modules de détection d'intrusions à différents niveaux du réseau (réseau d'accès, réseau de périphérie, réseau cœur) permettant de surveiller chaque tranche de réseau de bout en bout. Ces modules de détection sont configurés avantageusement pour échanger entre eux des informations sur les intrusions qu'ils détectent dans la tranche de réseau, permettant les uns et les autres de bénéficier des détections réalisées par les autres modules de détection mais également de mettre à jour leurs connaissances sur ces intrusions. Cette collaboration « horizontale », au sein d'une même tranche, dans le sens montant (du réseau d'accès vers le réseau cœur) et/ou descendant (du réseau cœur vers le réseau d'accès) permet d'améliorer la précision et la rapidité d'exécution des détections réalisées par les modules de détection.

Chaque module de détection, quel que soit le segment du réseau au niveau duquel il est déployé, peut être configuré pour exécuter automatiquement un certain nombre d'actions logiques prédéterminées, à savoir la surveillance du segment du réseau sur lequel il est déployé bien entendu, mais également l'analyse en profondeur du trafic lorsqu'une intrusion est suspectée, la notification des autres modules de détection pour leur signaler la détection d'une intrusion, l'agrégation et/ou la corrélation d'informations reçues d'autres modules de détection, le déclenchement d'actions de mitigation, etc. Ces actions sont configurables au niveau de chaque module de détection et peuvent varier en fonction du segment sur lequel est déployé le module en question (selon s'il s'agit d'un premier, deuxième ou troisième module au sens de l'invention), mais également en fonction d'autres facteurs, comme par exemple, la tranche de réseau sur lequel il est déployé et sa sensibilité en termes de sécurité, etc.

Conformément à l'invention selon le deuxième aspect, une telle action est effectuée par un module de détection lorsque celui-ci détermine qu'une probabilité d'exécuter cette action est supérieure à un seuil donné. Cette probabilité peut être évaluée par exemple périodiquement par le module de détection, ou en raison d'un événement particulier détecté par le module de détection.

Le seuil associé à une action peut être déterminé par des experts, être statique ou dynamique, varier en fonction des actions, etc. La prise en compte d'un tel seuil permet d'économiser les ressources du réseau et de chaque module de détection, d'améliorer les performances du réseau (par exemple en termes de qualité de service (QoS pour « Quality of Service »), de latence et/ou d' « overhead ») et de limiter la complexité du système de surveillance proposé par l'invention : les actions précitées ne sont effectuées par le module de détection que quand elles sont jugées nécessaires au regard des seuils fixés pour ces actions. Ainsi, certes l'invention s'appuie le déploiement de plusieurs modules de détection sur différents segments de chaque tranche de réseau pour assurer une surveillance efficace de cette tranche de réseau, mais la complexité résultant de ce déploiement distribué et des échanges prévus entre les modules de détection est compensée en limitant les actions effectuées par ces derniers dans le cadre de cette surveillance (notamment lorsqu'aucune attaque n'est en cours), et en ne déclenchant l'exécution de ces actions que lorsqu'elles sont jugées utiles et nécessaires pour assurer la sécurité du réseau.

L'invention offre donc un compromis entre sécurité et qualité de service, et fournit une solution performante et efficace en termes de ressources pour sécuriser un réseau mettant en œuvre une technique de découpage en tranches.

Dans un mode particulier de réalisation, le seuil déclenchant l'exécution d'une action est déterminé dynamiquement pour et par ledit module de détection au moyen d'un algorithme d'apprentissage automatique.

Par exemple, il peut être déterminé en fonction d'au moins un paramètre parmi :

- un nombre de fausses détections dudit module de détection (la notion de fausse détection peut être par exemple appréciée par rapport à une validation des intrusions détectées réalisée au niveau du réseau cœur, par exemple par un troisième module au sens de l'invention, ou par une entité de confiance telle qu'un centre d'opérations de sécurité (ou SOC pour Security Operation Center)) ;
- un nombre d'intrusions détectées par ledit module de détection ;
- au moins un type d'intrusions détectées par ledit module de détection ;
- au moins un type d'éléments surveillés par ledit module de détection.

Cette liste de paramètres n'est toutefois pas limitative, et d'autres paramètres pourraient être pris en compte pour déterminer dynamiquement le seuil.

Une telle adaptation dynamique du seuil permet de tenir compte avantageusement de l'environnement changeant des intrusions (attaques) informatiques, dans lequel les caractéristiques des intrusions peuvent évoluer rapidement ou de nouvelles intrusions apparaître, mais également des tranches de réseau (évolution des ressources allouées à la tranche de réseau, etc.). En présence d'un environnement aussi changeant, l'inventeur a constaté qu'un seuil fixé de manière dynamique permet d'assurer plus efficacement la sécurité du réseau. Ce mode de réalisation particulier du système de surveillance selon l'invention est donc particulièrement bien adapté pour un réseau dynamique tel qu'un réseau 5G mettant en œuvre une technique de découpages en tranches du réseau.

En outre, l'adaptation du seuil en fonction des paramètres précités permet également d'améliorer les performances du module de détection, puisqu'elle tient compte de paramètres traduisant ces performances (ex. nombre de fausses détections).

Dans un mode particulier de réalisation, l'algorithme d'apprentissage automatique est un algorithme Q-learning.

Un algorithme d'apprentissage automatique est particulièrement efficace pour suivre les changements de l'environnement dans lequel est déployé le module de détection. De façon connue de l'homme du métier, l'algorithme Q-learning présente l'avantage de ne requérir aucune connaissance initiale de l'environnement dans lequel il est utilisé. D'autres algorithmes d'apprentissage automatique, tels que par exemple une machine à vecteurs de support (ou SVM pour Support Vector Machine), peuvent être envisagés en variante.

On note que l'algorithme d'apprentissage automatique peut être appliqué à chaque seuil individuellement ou, lorsque le module de détection est configuré pour exécuter plusieurs actions, chacune conditionnée par un seuil, les seuils peuvent être déterminés conjointement au moyen dudit algorithme d'apprentissage automatique. Cela permet de tenir compte simultanément des différentes contraintes du réseau, non seulement en termes de sécurité mais également de qualité de service et de complexité (latence, overhead, etc.).

Dans un mode particulier de réalisation, l'algorithme Q-learning est un algorithme récursif comprenant à chaque itération, une évaluation d'une fonction utilité et d'une fonction récompense, ladite fonction utilité traduisant un effet d'une mise à jour dudit seuil à une itération précédente sur une performance de détection dudit module de détection, une valeur de ladite fonction récompense étant augmentée à ladite itération si une valeur de ladite fonction utilité pour ladite itération est supérieure à une valeur de ladite fonction utilité à une itération précédente et/ou si une mise à jour dudit seuil permet audit module de détection de détecter une intrusion de type nouveau, et diminuée sinon.

Ce mode de réalisation permet de mettre à jour le seuil pour améliorer la précision de la détection réalisée par le module de détection.

Dans un mode particulier de réalisation, la pluralité de modules de détection associée à ladite tranche comprend une pluralité de troisièmes modules associés respectivement à des fonctions réseau actives distinctes du réseau cœur.

Dans ce mode de réalisation, on déploie avantageusement un module de détection au niveau d'une pluralité de fonctions réseau assurées par le cœur de réseau et activées pour la tranche considérée (par exemple un module de détection par fonction réseau active). En effet, à un instant donné et pour un service donné, toutes les fonctions réseau présentes au niveau du cœur de réseau ne sont pas nécessairement activées. Ce mode de réalisation permet de protéger efficacement lesdites fonctions réseau actives et notamment les fonctions les plus critiques pour une tranche donnée, comme par exemple dans le contexte d'un réseau 5G, les fonctions AMF, UPF, et PCF évoquées précédemment.

En variante, on peut envisager qu'un même module de détection d'intrusions soit configuré pour surveiller simultanément plusieurs fonctions réseau actives.

Concernant les premier(s) et deuxième(s) modules, on peut par exemple envisager un module de détection d'intrusions déployé au niveau du réseau d'accès (et apte à surveiller les différentes entités de ce réseau d'accès ou connectées au réseau d'accès), et un module de détection d'intrusions déployé au niveau du réseau de périphérie (et apte à surveiller les différentes entités de ce réseau de périphérie). Bien entendu, une configuration avec davantage de premiers et deuxièmes modules peut être envisagée.

En outre, il convient de noter qu'un même module de détection, quelle que soit la partie du réseau au niveau de laquelle il est déployé, peut être utilisé pour surveiller plusieurs tranches de réseau simultanément. Autrement dit, l'invention met en œuvre une collaboration entre les modules de détection sur un plan horizontal.

Conformément à l'invention, les modules de détection déployés pour surveiller une même tranche de réseau sont configurés pour échanger entre eux des informations sur les intrusions qu'ils ont détectées et qui affectent les éléments qu'ils surveillent.

Dans un mode particulier de réalisation, ledit premier module est configuré pour, sur détection d'une intrusion, signaler ladite intrusion détectée audit deuxième module et/ou à un dit premier module associé à une autre tranche utilisant ledit réseau d'accès.

Autrement, outre une collaboration sur le plan horizontal, ce mode de réalisation offre la possibilité d'une collaboration sur un plan vertical, c'est-à-dire entre modules de détection déployés au niveau de tranches de réseau différentes mais utilisant le même réseau d'accès. Il s'agit par là-même de faire bénéficier aux autres tranches du réseau utilisant la même infrastructure physique, des informations sur les intrusions détectées au niveau de cette infrastructure, par exemple les caractéristiques de ces intrusions (aussi appelées « features » en anglais) et les signatures de ces dernières (ou « patterns » en anglais). De cette sorte, on améliore la précision de détection et la réactivité des modules de détection face à une attaque déployée au niveau du réseau d'accès, et le cas échéant, l'efficacité des actions de mitigation mise en place en réponse à cette attaque.

La sécurité du réseau en est améliorée, et cela bénéficie aux différentes tranches du réseau utilisant le réseau d'accès considéré.

Dans un mode particulier de réalisation, le deuxième module est configuré pour, sur détection d'une intrusion, signaler ladite intrusion détectée audit au moins un troisième module et/ou déclencher une action de mitigation au niveau du réseau d'accès et/ou du réseau de périphérie.

Les informations sur les intrusions détectées sont ainsi remontées au réseau cœur, ce qui permet au réseau cœur d'avoir une visibilité globale sur les intrusions ciblant les éléments de la tranche de réseau.

En outre une action de mitigation peut être déclenchée rapidement au plus près des éléments ciblés par l'intrusion (i.e. au niveau du réseau d'accès et/ou du réseau de périphérie), et de lutter plus efficacement contre l'intrusion.

Dans un mode particulier de réalisation, le troisième module est configuré pour signaler ladite intrusion détectée audit premier et/ou audit deuxième modules de détection, et/ou déclencher une action de mitigation dans le réseau.

Cela permet aux premier et deuxième modules de détection de bénéficier de la connaissance plus avancée du troisième module (car situé dans le réseau cœur et bénéficiant d'une vision plus globale sur le réseau, étayée par les remontées d'informations des différents modules de détection déployés dans le réseau d'accès et dans le réseau de périphérie) des intrusions affectant le réseau.

Dans un mode particulier de réalisation, chacun desdits modules de détection est configuré pour fournir une information représentative d'un niveau de confiance local attribué à ladite tranche en fonction d'un comportement d'au moins un élément qu'il surveille, un dit troisième module étant en outre configuré pour évaluer, à partir desdites informations fournies, un niveau de confiance global pour ladite tranche et à déclencher une action de mitigation d'une intrusion pour ladite tranche en fonction d'une valeur de ce niveau de confiance global.

Ce mode de réalisation met en œuvre une collaboration de ces modules de détection pour estimer un indice de confiance global pour chaque tranche de réseau, la valeur de cet indice de confiance global étant prise en compte pour déclencher si besoin une action de mitigation d'intrusions au niveau de ladite tranche.

Une telle action est par exemple, si la valeur du niveau de confiance global est inférieure à un seuil donné, une isolation de cette tranche du réseau et/ou une éviction d'au moins un élément du réseau d'accès, du réseau de périphérie et/ou du réseau cœur identifiés comme ciblés par une intrusion. Bien entendu, ces exemples d'actions de mitigation ne sont donnés qu'à titre illustratif et d'autres actions de mitigation peuvent être envisagées, en fonction notamment de la nature de l'intrusion détectée, de la valeur du niveau de confiance, de la gravité de l'intrusion, des informations d'anomalies remontées par les différents modules de détection d'intrusions, du ou des éléments ciblés par l'intrusion, etc.

En agissant ainsi de façon distribuée à différents niveaux de l'infrastructure réseau sur laquelle s'appuie chaque tranche de réseau, et grâce à la collaboration proposée entre les différents modules de détection, l'invention permet de limiter le taux de fausses détections (faux négatifs et/ou faux positifs) de chaque module de détection et d'améliorer la sécurité globale des tranches du réseau par rapport à l'état de la technique. La sécurisation de chaque tranche est en effet assurée de bout en bout du réseau, du terminal utilisateur jusqu'au réseau cœur : l'invention ne se contente pas de sécuriser le réseau d'accès ou le cœur de réseau, mais s'emploie à surveiller chaque partie du réseau pour chaque tranche considérée. Il en résulte une sécurité renforcée des différentes tranches de réseau.

En outre, l'évaluation d'un indice de confiance global pour la tranche permet de déterminer comment la tranche est affectée par la ou les intrusions détectées le cas échéant, et de déclencher une réponse adaptée. Cet indice de confiance global est avantageusement évalué dans la partie la plus sécurisée du réseau, à savoir dans le cœur du réseau, à partir d'informations collectées de façon distribuée dans le réseau sur différents segments du réseau. Il en résulte l'obtention d'un indice de confiance robuste et fiable.

Conformément à l'invention, l'indice global évalué pour une tranche est calculé à partir des indices locaux remontés par les premier(s), deuxième(s) et troisième(s) modules de détection. Dans un mode particulier de réalisation, le niveau de confiance global pour une tranche est par exemple une moyenne des niveaux de confiance locaux fournis par ladite pluralité de modules de détection.

Les niveaux de confiance locaux sont appréciés par les modules de détection distribués dans le réseau sur chaque tranche considérée, en fonction des anomalies qu'ils observent. On peut envisager différentes façons d'évaluer un tel niveau de confiance local.

Par exemple, dans un mode particulier de réalisation, au moins un niveau de confiance local est évalué par un dit module de détection pour une dite tranche comme un ratio entre une soustraction d'un nombre de comportements normaux dudit au moins un élément surveillé par ce module de détection et d'un nombre d'intrusions affectant ledit au moins un élément surveillé par ce module de détection détectées sur une période de temps donnée, par une somme desdits nombres.

Un tel niveau de confiance local est facile à évaluer par le module de détection en question, à partir de la surveillance qu'il opère au niveau où il est déployé. Toutefois, on peut envisager d'autres façons d'évaluer un niveau de confiance local pour la tranche. Par exemple, l'indice de confiance local peut être calculé à partir d'une somme pondérée des deux nombres précités, ou seulement l'un d'entre eux,...

Dans le mode de réalisation dans lequel une pluralité de troisièmes modules est déployés au niveau de diverses fonctions réseau actives du réseau cœur pour ladite tranche, le troisième module configuré pour évaluer le niveau de confiance global d'une tranche peut être sélectionné parmi ces troisièmes modules par exemple en fonction de sa proximité au(x) réseau(x) de périphérie et au(x) réseau(x) d'accès exploités par ladite tranche.

De cette sorte, on limite les risques d'attaques lors du transfert des informations entre les modules se trouvant au niveau du (ou des) réseau(x) d'accès et du (ou des) réseau(x) de périphérie et ce troisième module. Un tel module dans l'exemple d'un réseau 5G est par exemple un module de détection d'intrusions embarqué dans une fonction AMF ou PCF du réseau cœur.

L'invention vise également un réseau de communications, configuré pour mettre en œuvre un découpage en tranches, ledit réseau de communications comprenant un système de surveillance selon l'invention pour surveiller au moins une tranche dudit réseau.

Le réseau bénéficie des mêmes avantages cités précédemment que le système de surveillance selon l'invention.

On peut également envisager, dans d'autres modes de réalisation, que le procédé de surveillance, le système de surveillance et le réseau selon l'invention présentent en combinaison tout ou partie des caractéristiques précitées.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1, déjà décrite, représente, un réseau mettant en œuvre une technique de découpage en tranches de réseau ;

[Fig. 2] la figure 2 représente dans son environnement, un réseau selon l'invention dans un mode particulier de réalisation ;

[Fig. 3] les figures 3A et 3B représentent schématiquement les architectures fonctionnelles de deux modules de détection d'intrusions SID et C-SID* utilisés pour protéger différents segments du réseau de la figure 2 ;

[Fig. 4] la figure 4 illustre, sous forme d'ordinogramme, les principales étapes d'un procédé de surveillance selon l'invention, dans un mode particulier de réalisation dans lequel il est mis en œuvre par des modules de détection d'intrusions du réseau de la figure 2.

**Description de l'invention**

La **figure 2** représente un réseau de communications 1 conforme à l'invention, dans un mode particulier de réalisation.

Le réseau de communications 1 est par exemple ici un réseau 5G utilisant une technique de découpage en tranches ou « network slicing ».

De façon connue en soi, plusieurs réseaux d'accès distincts peuvent être utilisés pour accéder au cœur d'un réseau 5G. Aucune limitation n'est attachée ici au nombre ni à la ou aux technologies utilisées par ces réseaux d'accès (GSM, UMTS, LTE, WLAN, etc.).

Par ailleurs, on suppose ici que le réseau 1 utilise une approche dite d'informatique en périphérie, plus communément connue sous l'appellation anglaise de « edge computing ». Cette technologie, basée ici sur la norme MEC (pour « Multi-access Edge Computing »), consiste à déporter l'analyse, le traitement et le stockage de certaines données et/ou applications à la périphérie du réseau (dans un réseau dit de périphérie) plutôt que d'effectuer ces tâches dans des centres de données ou dans un cloud, parfois situés à plusieurs milliers de kilomètres des sources de ces données et/ou applications. Ce traitement décentralisé au plus près des sources des données et/ou applications permet avantageusement d'optimiser les besoins en bande passante, de limiter la transmission de nombreuses données et/ou applications vers les centres de données ou vers le « cloud » (et incidemment les fuites et/ou les problèmes de sécurité pouvant résulter de cette transmission), et de garantir une certaine fluidité et une rapidité de réaction. On limite ainsi la latence et les délais associés au traitement des données et/ou applications, et offre une performance en temps réel notamment aux applications large bande. Il en résulte une meilleure expérience utilisateur.

On comprend bien dès lors que le recours à un tel réseau de périphérie a un intérêt privilégié dans le contexte des réseaux de communication 4G et 5G, et de l'Internet des Objets (ou IoT pour « Internet of Things), dans lequel on assiste à une croissance exponentielle du trafic et à une explosion du nombre d'objets connectés au réseau.

Dans l'exemple illustré sur la figure 2, on considère huit tranches de réseau (ou « slices » en anglais) SL1, SL2, ...,SL8 représentant chacune un réseau sans fil, et s'appuyant sur l'infrastructure du réseau de communications 1. Plus particulièrement, les tranches de réseau se partagent des infrastructures de réseaux d'accès (référencées RAN sur la figure), des infrastructures de réseaux de périphérie (référencées MEC sur la figure), ainsi que des fonctions réseau virtuelles ou des groupes de fonctions réseau virtuelles du réseau cœur (CN pour « Core Network » ou cœur de réseau) du réseau de communications 1. De telles fonctions réseaux virtuelles sont par exemple des fonctions de routage, d'adressage, de contrôle de flux de données, de nommage, etc. Dans l'exemple de la figure 2, on considère plus particulièrement les fonctions réseau virtuelles AMF, SMF, UPF et PCF déjà évoquées précédemment.

Pour sécuriser le réseau 1, et plus particulièrement chaque tranche de réseau SL1,...,SL8 du réseau 1, ce dernier comprend, conformément à l'invention, un système de surveillance 2 comprenant une pluralité de modules de détection d'intrusions déployés au niveau de chaque tranche de réseau, et configurés pour surveiller des éléments dits « cibles » associés à cette tranche. Dans le mode de réalisation décrit ici, chaque module de détection d'intrusions (ou d'attaques informatiques) est un module logiciel, référencé de manière générale par SID (pour « Software Intrusion Detection »). Aucune limitation n'est attachée à la nature des techniques mises en œuvre par les modules de détection d'intrusions SID pour surveiller les éléments cibles qui leur sont rattachés. Par intrusions, on entend ici des attaques informatiques ou « cyber-attaques » susceptibles d'affecter diverses ressources du réseau 1 (ex. ressources de calcul, serveurs, ressources mémoire, etc.), ces attaques pouvant provenir d'attaquants internes ou externes au réseau 1. On note que les attaques en question peuvent cibler directement les ressources du réseau 1, ou celles-ci peuvent être des victimes indirectes des attaques.

Dans un mode particulier de réalisation, la détection de telles attaques peut s'appuyer indifféremment sur la détection d'anomalies au regard d'un comportement normal préalablement défini au moyen d'un modèle (ou « pattern »), ou sur la considération de règles et/ou de signatures définissant, pour des attaques connues, un certain nombre de caractéristiques du réseau symptomatiques de ces attaques, ou sur des algorithmes d'apprentissage supervisé ou non supervisé, ou sur des techniques hybrides, etc.

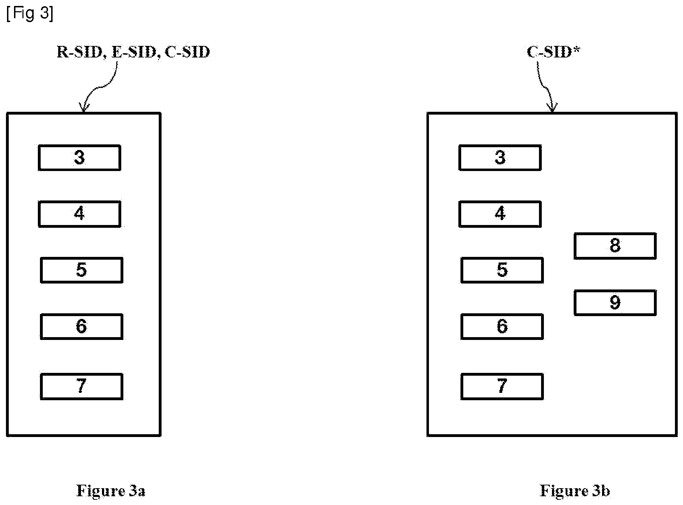

Dans le mode de réalisation décrit ici, on considère, comme représenté sur la **figure 3A,** que chaque module SID comprend :

- un sous-module de collecte de données 3, configuré pour collecter différentes caractéristiques déterminées du trafic transitant par les éléments surveillés par le module SID ;
- un sous-module de détection d'anomalies 4, configuré pour, à partir des données collectées par le sous-module de collecte 3, détecter une anomalie dans le comportement des éléments surveillés, par exemple en comparant à un modèle de comportement normal de ces éléments (c'est-à-dire en l'absence d'intrusions). Une anomalie consiste par exemple en un nombre anormal de paquets perdus, l'inondation du réseau 1 avec des données non désirées et répétées, des données sensibles altérées, une communication interrompue, un non-respect d'une latence imposée au niveau d'un segment du réseau, etc. ; et

- un sous-module d'analyse en profondeur 5, configuré pour analyser, par exemple au moyen d'un algorithme d'apprentissage automatique (ou « Machine Learning » en anglais), ou d'un algorithme de détection basé sur des signatures d'intrusions connues (reflétant des caractéristiques de trafic symptomatiques de ces intrusions par exemple), ou encore d'un algorithme hybride, une anomalie détectée par le sous-module de détection d'anomalies 4 et déterminer si cette anomalie est liée ou non à la présence d'une intrusion.

Pour chaque tranche de réseau SLi, i=1,...,N utilisant l'infrastructure du réseau 1, N désignant un nombre entier (égal à 8 dans l'exemple représenté sur la figure 2), l'invention propose de déployer une pluralité SID(SLi) de modules de détection d'intrusions de façon distribuée au sein de cette infrastructure. Les modules de détection associés à la tranche SLi (c'est-à-dire déployés pour assurer la sécurité de la tranche SLi) sont notés dans la suite de la description SIDj(SLi) avec j=1,...,K(SLi), K(SLi) désignant un nombre entier pouvant varier d'une tranche de réseau SLi à une autre. Par souci de simplification ici, on considère un même nombre K de modules de détection déployés pour chaque tranche, autrement dit K(SLi)=K pour tout i=1,...,N.

Les modules de détection SIDj(SLi) avec j=1,...,K associés à chaque tranche SLi sont déployés ici à trois niveaux de l'infrastructure du réseau 1 pour surveiller des éléments appartenant à différents segments du réseau 1, à savoir :

- au niveau du ou des réseaux d'accès RAN (par exemple au niveau de stations de base du ou des réseaux d'accès) utilisés par la tranche SLi : les modules sont alors référencés de manière générale par R-SID sur la figure 2 pour « Radio-SID » (ou R-SIDj(SLi) pour une tranche SLi), et en charge de la surveillance des différents éléments impliqués dans les communications radio ;
- au niveau du réseau de périphérie MEC utilisé par la tranche SLi : les modules sont alors référencés de manière générale par E-SID sur la figure 2 pour « Edge-SID » (ou E-SIDj(SLi) pour une tranche SLi), et en charge ici de protéger les serveurs de périphérie des attaques ; et
- au niveau du réseau cœur CN du réseau 1 : les modules sont alors référencés par C-SID sur la figure 2 pour « Core-SID » 2 (ou C-SIDj(SLi) pour une tranche SLi), et chargés de protéger ici les principaux composants du réseau cœur CN et notamment les fonctions réseau virtuelles AMF, SMF, PCF et UPF.

On note qu'aucune limitation n'est attachée à la nature des éléments surveillés sur chacun des segments de réseau précités (réseau d'accès, réseau périphérique, cœur de réseau) par les modules de détection SID : il peut s'agir de n'importe quelle ressource ou ensemble de ressources appartenant à ou déployées sur ces segments de réseau (ex. équipement utilisateurs, serveurs, fonctions réseau, cellules, ressources mémoire, réseau ou de calcul, données, etc.).

Par ailleurs, aucune limitation n'est attachée à la nature des équipements sur lesquels sont déployés les modules de détection SID (serveur, centre de données, station de base, etc.). Ces équipements ont l'architecture matérielle d'un ordinateur et comprennent notamment un processeur, une mémoire vive, une mémoire morte, une mémoire non volatile et des moyens de communications qui leur permettent de soutenir une communication entre modules de détection SID notamment. La mémoire morte d'un tel équipement sur lequel est déployé un module de détection SID est un support d'information sur lequel est enregistré un programme d'ordinateur lisible par le processeur et comportant des instructions pour l'exécution des différentes fonctions remplies par ce module de détection SID.

Dans le mode de réalisation décrit ici, une collaboration horizontale, ascendante et descendante, au sein de chaque tranche de réseau SLi, est mise en œuvre entre les modules SID déployés sur les trois niveaux précités. Plus particulièrement, dans chaque tranche de réseau SLi, les modules R-SID(SLi) font remonter des informations aux modules E-SID(SLi), qui à leur tour, remontent des informations aux modules C-SID(SLi) (collaboration horizontale ascendante ou montante). De telles informations sont relatives notamment aux intrusions (attaques) et/ou aux anomalies détectées par les modules SID, l'emplacement des cibles de ces intrusions ou des éléments affectés par celles-ci, les instants de détection de ces intrusions, les caractéristiques (ou attributs) de ces intrusions, etc.

Du fait de cette collaboration horizontale, les modules R-SID, E-SID et C-SID sont en outre configurés pour surveiller les informations qui leur sont remontées, et pour exploiter avantageusement ces informations dans les détections qu'ils opèrent. Typiquement, un module C-SID peut par exemple analyser les caractéristiques des attaques détectées par les modules E-SID qui lui sont remontées, pour vérifier si des attaques sont en cours contre ces derniers. La visibilité du module C-SID sur plusieurs modules E-SID peut lui permettre de détecter précisément si certains d'entre eux sont malveillants et/ou la cible d'attaques.

Cette collaboration horizontale « ascendante » (du réseau d'accès vers le cœur de réseau) peut s'accompagner d'une collaboration horizontale « descendante », au cours de laquelle un module C-SID informé d'une intrusion détectée par un module E-SID ou R-SID confirme ou infirme la présence de cette intrusion (autrement dit, valide soit positivement soit négativement la détection opérée par le module E-SID ou R-SID), et fait part de sa décision au module E-SID ou R-SID pour lui permettre d'améliorer ses détections, et comme détaillé plus davantage ultérieurement, adapter certains paramètres de fonctionnement. On note qu'un module C-SID peut, dans un mode particulier de réalisation, solliciter une autorité de confiance telle un centre d'opérations de sécurité (ou SOC pour « Security Operation Center », non représenté sur la figure 2), pour valider ses propres détections et transmettre les décisions du SOC aux modules E-SID et R-SID qui lui rapportent.

Aucune limitation n'est attachée au nombre de modules SID déployés sur chaque segment de chaque tranche de réseau (réseau d'accès, réseau de périphérie, et réseau cœur). Dans la suite de la description, on suppose par exemple par souci de simplification, que, pour une tranche de réseau donnée, un unique module R-SID est déployé au niveau de chaque réseau d'accès, un unique module E-SID est déployé au niveau de chaque réseau de périphérie, et que plusieurs C-SID sont déployés au niveau du réseau cœur pour surveiller une ou plusieurs fonctions réseau actives distinctes du réseau cœur.

On note qu'un même module SID peut surveiller et/ou protéger une ou plusieurs tranches de réseau simultanément, et/ou un ou plusieurs éléments. Ainsi dans l'exemple illustré à la figure 2 :

- un module R-SID est déployé au niveau de chaque station de base (eNodeB) des quatre réseaux d'accès utilisés respectivement par les tranches de réseau SL1-SL2, SL3-SL4, SL5-SL6 et SL7-SL8, et chaque module R-SID ainsi déployé est configuré pour surveiller une unique tranche de réseau. Par exemple le module R-SID surveille la station de base sur laquelle il est déployé ; il peut également être configuré pour surveiller en plus de la station de base eNode B, les différents équipements utilisateurs rattachés à cette station de base et/ou les nœuds du réseau 1 communiquant avec elle ;
- un module E-SID est déployé au niveau de chacun des deux réseaux de périphérie utilisés respectivement par les tranches SL1 à SL4 et SL5 à SL8 pour surveiller simultanément quatre tranches de réseau. Par exemple, le module E-SID est configuré pour surveiller les différents nœuds (ex. serveurs, espaces de stockage, etc.) du réseau de périphérie au niveau duquel il est déployé ; et
- un module C-SID est déployé au niveau de la fonction AMF du réseau cœur et utilisé pour surveiller simultanément les huit tranches de réseau SL1-SL8, tandis que d'autres modules C-SID sont configurés pour surveiller respectivement deux ou trois tranches de réseau et plusieurs fonctions réseau simultanément (i.e. les fonctions SMF, PCF et UPF dans l'exemple de la figure 2).

Dans le mode de réalisation décrit ici, chaque module de détection SID est configuré pour exécuter une ou plusieurs actions lors de la surveillance qu'il opère. Ainsi, outre l'action de surveillance des données collectées par le sous-le module de collecte 3 et l'action d'analyse en profondeur par le sous-module 5 des anomalies détectées lors de cette surveillance et l'action de notification (ou de transmission d'alertes visant à signaler les intrusions détectées) qui sont communes à chacun des modules de détection SID, ces actions peuvent comprendre par exemple une action d'agrégation et/ou de corrélation des informations reçues le cas échéant d'un autre module de détection SID, une action de mitigation d'intrusion (ou de réaction à une intrusion), etc. Cette liste n'est donnée qu'à titre indicatif et n'est en aucun cas limitative ni exhaustive.

Ces actions sont des actions « logiques » mises en œuvre de façon logicielle, dans le mode de réalisation décrit ici. Elles peuvent être configurées et instanciées au niveau de chaque module de détection SID par un expert en cyber-sécurité, afin d'être exécutées de façon automatique par ledit module de détection SID. Le choix de la ou des actions mises en œuvre au niveau de chaque module SID peut dépendre de différents facteurs, comme par exemple du segment de réseau sur lequel est déployé le module SID, de paramètres à optimiser, etc.

Dans le mode de réalisation décrit ici, les actions choisies pour chaque module SID diffèrent en fonction du segment de réseau sur lequel il est déployé. Plus particulièrement, les modules de détection de type R-SID sont configurés pour exécuter des actions de surveillance et de détection d'anomalies, d'analyse en profondeur des anomalies détectées et de notification d'intrusions détectées le cas échéant à d'autres modules de détection SID ; les modules de détection de type E-SID et C-SID sont configurés pour exécuter outre les actions précitées, des actions d'agrégation et/ou de corrélation des informations sur les intrusions qui leur sont notifiées le cas échéant avant de les transmettre vers un autre module de détection, et de mitigation d'intrusion.

Ces différentes actions se définissent de la façon suivante :

- les actions de surveillance et de détection d'anomalies consistent à collecter (au moyen du sous-module 3 de la figure 3A) différentes données prédéfinies concernant le trafic transitant par les éléments surveillés et à déterminer (au moyen du sous-module 4 de la figure 3A) si les données collectées par le sous-module de collecte 3 laissent suspecter ou non une anomalie ;
- l'action d'analyse en profondeur consiste en l'application (au moyen du sous-module 5 précédemment de la figure 3A) d'un algorithme d'apprentissage automatique (ou « Machine learning ») pour analyser en profondeur les données représentatives d'une anomalie et déterminer si cette anomalie est due ou non à une intrusion. Comme mentionné précédemment, aucune limitation n'est attachée à la technique appliquée ; il peut s'agir par exemple d'un algorithme d'apprentissage supervisé ou non, d'un réseau de neurones, d'une machine à vecteurs de support, etc. ;
- l'action de notification consiste en l'envoi d'alerte(s) lorsqu'une intrusion a été détectée par le module SID, typiquement à un autre module SID. La notification peut se faire de façon horizontale, comme discuté précédemment, c'est-à-dire au sein d'une même tranche de réseau (par exemple, un module R-SID notifie un module E-SID associé à la même tranche ou un module E-SID notifie un module C-SID associé à la même tranche, ou encore un module C-SID notifie les modules R-SID et E-SID associés à la même tranche), ou de façon verticale, par exemple entre des modules R-SID associés à des tranches de réseau différentes utilisant le même réseau d'accès. Cette alerte peut contenir diverses informations sur l'intrusion détectée, comme par exemple le nombre de cibles et les cibles suspectées de cette intrusion (ex. leur localisation), l'instant de détection de l'intrusion, les caractéristiques de cette intrusion (c'est-à-dire les attributs considérés ayant mené à la détection de l'intrusion), etc. Le but principal de cette action est de permettre aux différents modules SID de partager leurs informations sur les intrusions détectées et ainsi de faire en sorte notamment que les modules E-SID et C-SID aient une connaissance des intrusions détectées sur la tranche de réseau. Cela permet d'améliorer la précision de détection de ces modules de façon dynamique ;

- l'action d'agrégation et/ou de corrélation consiste à collecter et à agréger les alertes notifiées et, en corrélant entre elles ces alertes, à supprimer les informations redondantes. Lors de cette opération, le module de détection SID compresse en quelque sorte l'information à transmettre vers les autres modules de détection SID. De cette sorte, on limite la quantité d'informations remontées jusqu'aux modules C-SID (et donc la signalisation (ou overhead) associée), et on accélère le processus de détection d'intrusions et de mitigation des intrusions détectées le cas échéant ;

- l'action de mitigation d'intrusion consiste à déclencher une ou plusieurs réactions visant à traiter ou à faire disparaître l'intrusion détectée, ou tout du moins à la rendre inopérante sur le réseau 1. Ces réactions peuvent dépendre du segment de réseau sur lequel l'action de mitigation est appliquée. Ainsi par exemple, au niveau d'un module E-SID, on peut envisager d'isoler ou d'exclure du réseau 1 les éléments ciblés par l'intrusion se trouvant au niveau du réseau d'accès ou du réseau de périphérie (ex. équipements utilisateurs ou serveurs MEC), de sorte que ceux-ci ne puissent plus être impliqués dans une communication ou un service offert par le réseau de communication 1. Au niveau d'un module C-SID, l'action de mitigation peut consister en une isolation (i.e. suppression ou désactivation) de la tranche de réseau ciblée par l'intrusion, et de la constitution d'une liste noire référençant les éléments ciblés par l'intrusion se trouvant au niveau du (ou des) réseau(x) d'accès, du (ou des) réseaux de périphérie et/ou du réseau cœur utilisés par la tranche infectée. L'isolation d'une tranche de réseau peut être décidée notamment en tenant compte d'un indice de confiance global estimé pour cette tranche, comme détaillé davantage ultérieurement.

Bien entendu, d'autres actions peuvent être envisagées au niveau de chaque module de détection SID.

Dans le mode de réalisation décrit ici, l'activation (i.e. l'exécution) au niveau d'un module de détection SID de tout ou partie des actions qu'il est en mesure d'exécuter se fait de manière automatique, lorsque le module de détection SID en question détecte, via un sous-module d'activation 6 (cf. figure 3A), qu'une probabilité d'exécuter ces actions est supérieure à un seuil déterminé (i.e. donné). Ce mécanisme offre la possibilité de paramétrer le système et permet de préserver les ressources du module de détection tout en assurant efficacement la sécurité du segment de réseau qu'il surveille. On note que dans le mode de réalisation décrit ici, chaque module de détection SID considéré est configuré pour exécuter en continu des actions de surveillance et de détection d'anomalies telles que décrites ci-avant.

Un seuil différent selon la nature de l'action et/ou le module de détection SID et/ou le type de module de détection SID (R-SID, E-SID ou C-SID) considéré(e) peut être envisagé. Par exemple si $p_{deep}(x)$, $p_{agregco}(x)$, $p_{notif}(x)$, $p_{mitig}(x)$ désignent respectivement les probabilités d'exécuter une action d'analyse en profondeur, une action d'agrégation et/ou de corrélation, une action de notification et une action de mitigation au niveau d'un module de détection SID référencé par x (x désignant un module R-SID, E-SID, ou C-SID), ces actions sont déclenchées exécutées respectivement par le module de détection SID respectivement si :

$$p_{deep}(x) > TH_{deep}(x)$$

$$p_{agregco}(x) > TH_{agregco}(x)$$

$$p_{notif}(x) > TH_{notif}(x)$$

$$p_{mitig}(x) > TH_{mitig}(x)$$

où $TH_{deep}(x)$, $TH_{agregco}(x)$, $TH_{notif}(x)$ et $TH_{mitig}(x)$ désignent respectivement les seuils fixés pour chacune des actions d'analyse en profondeur, d'agrégation et/ou de corrélation, de notification et de mitigation.

On note qu'on peut envisager que pour un même segment de réseau, des seuils différents s'appliquent aux différents modules de détection déployés pour surveiller ce segment de réseau. Par ailleurs, des seuils différents peuvent être définis pour chaque tranche de réseau considérée.

Dans le mode de réalisation décrit ici, les probabilités $p_{deep}(x)$, $p_{agregco}(x)$, $p_{notif}(x)$, $p_{mi\text{-}tig}(x)$ sont calculées périodiquement par le sous-module d'activation 6 du module de détection SID considéré de la façon suivante. En variante, elles peuvent être calculées sur détection d'événements particuliers (ex. une intrusion détectée par un module de détection d'une autre tranche du réseau, une information reçue du centre d'opérations de sécurité, etc.).

Au niveau de n'importe quel module de détection SID (R-SID, E-SID, C-SID), la probabilité $p_{deep}(x)$ est évaluée comme le ratio du nombre d'intrusions ND détectées par le module de détection SID sur le nombre total NA d'intrusions détectées dans la tranche de réseau considérée. Le nombre total d'intrusions détectées dans la tranche de réseau correspond aux intrusions confirmées par le réseau cœur (i.e. par un module C-SID) pour les modules R-SID et E-SID, ou par le SOC pour les modules C-SID. On note que le réseau cœur et le SOC ayant une visibilité plus importante sur le réseau 1 et donc sur chaque tranche de réseau, et bénéficiant des informations remontées par les différentes modules de détection SID déployés sur les différents segments du réseau, ont une meilleure précision de détection, de sorte qu'il peut être fait l'hypothèse que NA≥ND.

Au niveau d'un module E-SID, respectivement d'un module C-SID, la probabilité $p_{agregco}(x)$ est évaluée comme le ratio du nombre d'intrusions détectées au niveau du réseau d'accès pour la tranche de réseau considérée par le ou les modules R-SID et notifiées au module E-SID, respectivement au niveau du ou des réseaux de périphérie par le ou les modules E-SID et notifiées au module C-SID, et du nombre total d'intrusions détectées au niveau du réseau de périphérie pour la tranche de réseau considérée par le module E-SID, respectivement au niveau du réseau cœur par le module C-SID. On note là encore que l'hypothèse est faite que le module E-SID, respectivement C-SID, dispose d'une meilleure précision de détection que le module R-SID, respectivement E-SID, de sorte que les ratios ainsi calculés sont bien inférieurs ou égaux à un 1.

Au niveau d'un module de détection R-SID, la probabilité $p_{notif}(x)$ est évaluée ici de façon identique à la probabilité $p_{deep}(x)$, i.e. $p_{notif}(x)=p_{deep}(x)$.

Au niveau des modules E-SID et C-SID, les probabilités $p_{notif}(x)$ et $p_{mitig}(x)$ sont calculées comme le ratio de la probabilité $p_{desp}(x)$ et de la probabilité $p_{agregco}(x)$.

Bien entendu, d'autres façons ou d'autres règles pour déterminer les probabilités $p_{deep}(x)$, $p_{agregco}(x)$, $p_{notif}(x)$, $p_{mitig}(x)$ peuvent être appliquées. Par exemple lorsqu'un module de détection SID voisin (dans le sens où il dispose d'une connectivité avec le module SID en question), appartenant à la même tranche de réseau ou au même réseau d'accès, signale la détection d'une intrusion au module de détection SID, il peut décider de forcer la valeur de la probabilité $p_{deep}(x)$ à 1. D'autres règles peuvent être considérées en variante. Chaque seuil auquel est comparée une probabilité de déclencher une action donnée peut être fixé de manière statique, par exemple par des experts en cyber-sécurité. On note qu'un seuil pris égal à 0 revient à ne pas conditionner l'exécution de l'action considérée, i.e. celle-ci est exécutée de manière systématique dès lors qu'elle est pertinente (ex. notification émise dès lors qu'une intrusion est détectée, analyse en profondeur). Ces seuils peuvent être fixés de sorte à optimiser les ressources du réseau 1 (« overhead » pour les notifications, ressources de calcul, charge du réseau, etc.).

En variante, chaque seuil peut être déterminé dynamiquement par et pour le module de détection SID considéré (par exemple par son sous-module d'activation 6) en fonction de divers paramètres, et notamment du nombre de fausses détections réalisées par ce dernier. D'autres paramètres peuvent être considérés comme par exemple le nombre d'intrusions détectées ou de cyber-attaquants, les éléments ou le segment de réseau surveillés par le module de détection SID, le type d'intrusions détectés, etc. Cette mise à jour dynamique des seuils permet de s'adapter à l'environnement changeant des intrusions informatiques et notamment de détecter de nouvelles intrusions.

Pour mettre à jour dynamiquement un seuil, le module de détection SID peut utiliser un algorithme d'apprentissage automatique tel que par exemple un algorithme récursif d'apprentissage par renforcement aussi couramment appelé algorithme Q-learning, connu de l'homme du métier. Bien entendu d'autres algorithmes peuvent être utilisés, comme par exemple un algorithme SVM (Support Vector Machine), etc.

Dans le mode de réalisation décrit ici, on suppose que tous les seuils associés à des actions exécutées par un module de détection SID sont mis à jour dynamiquement et conjointement au moyen de l'algorithme d'apprentissage automatique. Cette mise à jour conjointe exploite l'impact de la collaboration horizontale mise en œuvre par les modules de détection SID sur les détections qu'ils opèrent, et la corrélation entre les différentes actions que les modules de détection SID sont susceptibles d'exécuter.

Par exemple, si de nombreuses anomalies sont détectées par le module E-SID, il doit être en mesure d'analyser toutes ces anomalies, doit agréger de façon efficace les informations qu'il remonte à un module C-SID (typiquement remonter toutes les informations sur les intrusions qu'ils détectent si ces intrusions sont nombreuses, ou au contraire espacer les remontées d'informations si les intrusions sont inexistantes ou rares au niveau du réseau de périphérie), réagir rapidement en déclenchant des actions de mitigation, et notifier rapidement les modules de détection C-SID auquel il rapporte. Autrement dit, les seuils associés aux actions d'analyse en profondeur, de notification, de mitigation et d'agrégation doivent être proches de 0.

Cette mise à jour conjointe des seuils permet ainsi d'obtenir un compromis entre la précision des détections opérées par les modules de détection et la qualité du service assurée par la tranche de réseau sur laquelle ils sont déployées (overhead, latence, etc.).

En variante, une détermination individuelle de chacun des seuils peut être envisagée.

Plus particulièrement, les valeurs initiales des seuils $TH_{deep}(x)$, $TH_{agregco}(x)$, $TH_{notif}(x)$ et $TH_{mitig}(x)$ peuvent être fixées par des experts en cyber-sécurité ou être prises égales à une valeur quelconque, par exemple 0.5.

Puis le module de détection SID considéré applique l'algorithme Q-learning pour mettre à jour récursivement et conjointement les valeurs de seuil. A cet effet, il s'appuie ici sur une fonction « utilité » notée U évaluée à chaque itération t de l'algorithme et définie par :

[Eq. 1]

$$U(t) = \frac{ND(t) - (NP(t) + NN(t))}{NA(t)}$$

avec ND(t) le nombre d'intrusions détectées correctement à l'itération t par le module de détection SID, NP(t) le nombre de faux positifs détectés par le module de détection SID à l'itération t (i.e. nombre d'anomalies assimilées à des intrusions par le module de détection SID alors qu'il s'agissait de comportements normaux), NN(t) le nombre de faux négatifs détectés par le module de détection SID à l'itération t (i.e. nombre d'anomalies assimilées à des comportements normaux par le module de détection SID alors qu'il s'agissait d'intrusions) et NA(t) le nombre d'intrusions totales affectant la tranche considérée du réseau 1 à l'itération t. Ce nombre NA(t) peut être estimé par le centre d'opérations de sécurité ou par le réseau cœur qui disposent d'une vue globale sur le réseau et fourni par ce dernier au module de détection SID (ex. régulièrement). On note que les nombres de faux positifs et de faux négatifs sont déterminés en prenant comme référence les résultats des validations mentionnées précédemment, opérées sur les détections réalisées par le module de détection SID (ex. validation faite par le module C-SID pour un module R-SID ou E-SID, et par le SOC pour un module C-SID).

A chaque itération t, si les valeurs courantes des seuils ne sont pas toutes nulles, le module SID calcule la valeur d'utilité U(t) pour l'itération t et la compare à la valeur d'utilité calculée à l'itération t-1 précédente.

Il met ensuite à jour, en fonction du résultat de la comparaison, une valeur de récompense notée R(t), initialisée à 0. La valeur de récompense est incrémentée ici de 1 quand U(t) > U(t-1) et décrémentée de 1 sinon.

Puis le réseau de neurones de l'algorithme Q-learning est activé pour calculer conjointement de nouvelles valeurs de seuils $TH_{deep}(x)$, $TH_{agregco}(x)$, $TH_{notif}(x)$ et $TH_{mitig}(x)$ (ou seulement une partie de ces valeurs selon les actions exécutées par le module SID considéré) en lui fournissant ici comme entrées les valeurs courantes des seuils, le nombre d'intrusions détectées sur le segment surveillé par le module de détection SID, les éléments surveillés par celui-ci, le type d'intrusions détectées, et la valeur de récompense courante R(t) qui vient d'être mise à jour.

Les nouvelles valeurs de seuils ainsi calculées sont fournies et utilisées par le module 5 d'analyse en profondeur. Si une intrusion d'un nouveau type est détectée avec ces nouvelles valeurs de seuils, alors de nouveau le module SID incrémente de 1 la valeur de la récompense R(t). Sinon il décrémente de 1 ladite valeur de récompense.

Il convient de noter que dans le mode de réalisation décrit ici, la valeur de la récompense R(t) peut avantageusement être incrémentée deux fois au cours d'une itération : une première fois parce que la fonction d'utilité est meilleure qu'à l'itération précédente suite à la mise à jour des seuils, et une seconde fois parce que la mise à jour des seuils permet de détecter des intrusions d'un nouveau type qui ne pouvaient pas être détectées auparavant.

Les étapes de l'algorithme Q-learning qui viennent d'être décrites sont itérées jusqu'à ce que le ratio ND(t)/NA(t) converge vers 1, comme résumé dans la table 1 ci-dessous pour une mise à jour conjuguée de tous les seuils $TH_{deep}(x)$, $TH_{agregco}(x)$, $TH_{no-tir}(x)$ et $TH_{mitig}(x)$ (l'homme du métier saurait adapter sans difficulté ces étapes à une mise à jour de seulement une partie de ces seuils).

[Table 1]

```
Début t=0; Rt=Ut=0
Répéter :
    incrémenter t;
    Si (THdeep(x), THagregco(x), THnotif(x),THmitig(x))≠(0,0,0,0)
        calculer Ut;
    Si Ut>Ut-1
        alors Rt=Rt-1+1;
    sinon
        Rt=Rt-1-1;
    Estimation des nouvelles valeurs de THdeep(x), THagregco(x),
THnotif(x),THmitig(x) en utilisant Rt ;
    Exécution de l'analyse en profondeur en utilisant les nouvelles valeurs
de THdeep(x), THagregco(x), THnotif(x),THmitig(x) ;
    Si une intrusion d'un nouveau type est détectée :
        Rt=Rt-1+1;
    sinon
        Rt=Rt-1-1;
Jusqu'à ce que ND(t)/NA(t)→1
```

On peut également envisager que certains seuils soient fixés statiquement et d'autres dynamiquement.

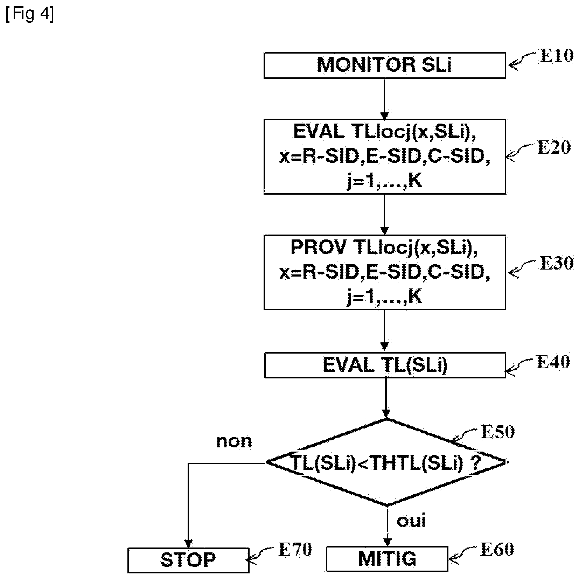

En référence à la figure 4, conformément à l'invention, le système de surveillance 2 est configuré pour évaluer pour chaque tranche de réseau SLi, i=1,..,N, un indice de confiance global, en appliquant le procédé de surveillance selon l'invention. La **figure 4** représente les principales étapes d'un tel procédé telles que mises en œuvre dans un mode particulier de réalisation par le système de surveillance 2.

Plus particulièrement, conformément à l'invention, chaque module de détection SIDj(SLi) associé à (ou déployé pour surveiller les éléments attachés à) une tranche de réseau SLi comprend outre les sous-modules 3 à 6 précédemment décrits, un sous-module d'évaluation 7 (cf. figure 3A), configuré pour évaluer, lors de la surveillance des éléments rattachés au module de détection SIDj(SLI) (étape E10), une information TLlocj(x,SLi) comprise ici entre 0 et 1 et représentative d'un niveau de confiance local attribué à cette tranche de réseau, x indiquant comme précédemment si le module de détection SIDj(SLi) considéré est un module R-SID, E-SID ou C-SID.

Cette information mesure la confiance du module de détection SIDj(SLi) en les éléments qu'il surveille, cette confiance étant déterminée en fonction des comportements de ces éléments, observés par le module de détection SIDj(SLi) (notamment via son sous-module de surveillance 4). Plus spécifiquement, dans le mode de réalisation décrit ici, l'information (ou plus simplement le niveau de confiance local) TLlocj(x,SLi) est évaluée de la façon suivante par le sous-module d'évaluation 7 du module de détection SIDj(SLi) (étape E20) :

$$TLlocj(x,SLi)=(BOK-BNOK)/(BOK+BNOK)$$

où BNOK désigne le nombre d'intrusions détectées sur une période T de temps déterminée par le module de détection SIDj(SLi) affectant les éléments qu'il surveille, BOK désigne le nombre de comportements "normaux" observés par le module de détection SIDj(SLi) sur les éléments qu'il surveille sur la période T. La normalité ou anormalité d'un comportement d'un élément surveillé peut être estimé à partir de critères prédéfinis ou de modèles de comportements normaux tels que ceux utilisés par le sous-module 4 de détection d'anomalies. On note qu'on suppose ici que la différence BOK-BNOK est positive. Si ce n'est pas le cas, la valeur de l'indice de confiance est forcée à 0.

Ainsi, si les éléments surveillés par un module de détection SIDj(SLi) persistent à avoir des comportements jugés « anormaux » (laissant suspecter la présence d'une intrusion), l'indice de confiance local TLlocj(x,SLi) tend vers 0. Inversement, si des comportements normaux sont observés, l'indice de confiance local TLlocj(x,SLi) tend vers 1. On note que l'indice de confiance local TLlocj(x,SLi) est obtenu en considérant tous les éléments surveillés par le module de détection SIDj(SLi) (autrement dit on moyenne des indices de confiance associés individuellement à chaque élément surveillé).

Bien entendu, d'autres manières d'estimer un indice de confiance local peuvent être envisagées dans le contexte de l'invention, comme par exemple une somme pondérée des nombres BOK et BNOK, seulement l'un de ces deux nombres, ou toute autre fonction de ces deux nombres, etc.

Comme mentionné ci-avant, un niveau de confiance local est évalué par chaque module de détection SIDj(SLi) déployé sur la tranche de réseau SLi : autrement dit, chaque module R-SIDj(SLi), chaque module E-SIDj(SLi) et chaque module C-SIDj(SLi) déployés sur la tranche de réseau SLi évaluent un indice de confiance local en tenant compte du comportement des éléments qu'ils surveillent respectivement. Les indices de confiance locaux ainsi évalués pour la tranche de réseau SLi sont ensuite fournis à un module de détection C-SID*(SLi) déployé au niveau du cœur de réseau (étape E30) pour la tranche de réseau SLi. Dans le mode de réalisation décrit ici, on suppose que cette fourniture se fait de manière sécurisée par exemple en chiffrant les messages comprenant les indices de confiance locaux ; ce chiffrement peut s'appuyer notamment sur un protocole de cryptographie robuste et léger tel que celui décrit dans le document de J. Ni et al. intitulé « Efficient, Secure and Privacy-preserving Network Slicing for 5G-enabled IoT Systems », IEEE Journal on Selected Areas in Communications, vol. 36, issue 3, 2018.

Dans le mode de réalisation décrit ici, le module de détection C-SID*(SLi) comprend, outre les sous-modules 3 à 7 précédemment décrits, un second sous-module 8 d'évaluation ainsi qu'un sous-module 9 de mitigation (cf. figure 3B). Le second sous-module 8 d'évaluation est configuré pour évaluer un indice de confiance global pour la tranche de réseau SLi, compris ici entre 0 et 1, à partir des informations représentatives des indices de confiance locaux fournies par l'ensemble des modules de détection SIDj(SLi). Plus particulièrement, dans le mode de réalisation décrit ici, l'indice de confiance global TL(SLi) pour la tranche de réseau SLi est évalué par le sous-module 8 du module de détection C-SID*(SLi) comme la moyenne des indices de confiance locaux fournis par tous les modules SIDj(SLi) associés à la tranche SLi (étape E40).

En variante, l'indice de confiance global peut être évalué en utilisant une autre fonction que la moyenne des indices de confiance locaux, comme par exemple un écarttype des indices de confiance locaux, une somme pondérée avec un poids plus important donné aux indices de confiance locaux estimés par les modules C-SID qui ont une vue plus globale sur le réseau, etc.

On note que les indices de confiance locaux évalués par les modules R-SID peuvent être collectés par les modules E-SID en liaison avec les modules R-SID, puis fournis par les modules R-SID à un module C-SID, lui-même en connexion avec le module C-SID*. En variante, une communication directe entre les modules R-SID et E-SID et le module C-SID* peut être envisagée.

Le module C-SID*(SLi) est ici l'un des modules de détection C-SID(SLi) déployés dans le réseau cœur et en charge de surveiller une ou plusieurs fonctions réseau activées pour la tranche de réseau SLi. Dans le mode de réalisation décrit ici, on choisit comme module C-SID*(SLi) un module de détection C-SID déployé dans le cœur de réseau au plus proche du (ou des) réseau(x) de périphérie et du (ou des) réseau(x) d'accès, par exemple, le module de détection C-SID en charge de la surveillance de la fonction réseau AMF (qui correspond à la « première » fonction active du réseau cœur sollicitée pour l'accès au service fourni par la tranche de réseau SLi). En variante, il peut s'agir le module de détection C-SID en charge de la surveillance d'une autre fonction réseau telle que la fonction UPF. On note que pour le calcul de l'indice global de confiance, le module C-SID*(SLi) choisi prend également en compte son propre indice de confiance local.

Une fois l'indice de confiance global évalué, le module C-SID*(SLi) détermine, au moyen de son sous-module 9 de mitigation, si une action de mitigation doit être déclenchée compte tenu de la valeur de cet indice (étape test E50). A cet effet, il compare l'indice de confiance global évalué TL(SLi) avec un seuil donné, noté ici THTL(SLi). Ce seuil peut varier d'une tranche de réseau à un autre (par exemple être plus élevé pour les tranches de réseau nécessitant une sécurité accrue), ou être le même pour toutes les tranches de réseau, dépendre des services offerts sur la tranche de réseau, etc. Il peut être fixé par un expert en cyber-sécurité pour chacune des tranches de réseaux considérées et peut être paramétrable et évoluer au fil du temps. Par exemple, ce seuil peut être fixé à 0.8.

En raison de la convention utilisée ici, si l'indice de confiance global évalué TL(SLi) est ici inférieur au seuil THTL(SLi) défini pour cette tranche (réponse oui à l'étape test E50), alors le sous-module 9 de mitigation déclenche une action de mitigation d'une intrusion pour la tranche de réseau SLi (étape E60). Différents types d'actions de mitigation peuvent être déclenchées : par exemple, le module C-SID*(SLi) peut décider d'isoler (i.e. supprimer ou désactiver) la tranche de réseau SLi notamment si l'indice de confiance global est inférieur à un seuil bas (ex. 0.3), ou d'isoler un segment de réseau sur lequel s'appuie la tranche de réseau SLi, ou d'identifier dans une liste noire certains éléments associés à cette tranche de réseau considérés comme malicieux (le module C-SID*(SLi) peut à cet effet s'appuyer sur les informations remontées par les différents modules SID(SLi) déployés pour surveiller la tranche de réseau pour identifier de tels éléments et/ou les actions à entreprendre), de sorte à bloquer le trafic à destination ou en provenance de ces éléments malicieux, ou d'informer le centre d'opérations de sécurité SOC qui peut décider des actions de mitigation à effectuer dans le réseau 1, etc. Il convient de noter que l'action de mitigation déclenchée peut varier en fonction également de la valeur de l'indice de confiance global TL(SLi) ; de même, l'action de mitigation peut être décidée par le module C-SID* (SLi) en analysant les indices de confiance locaux, pour déterminer où cette action doit être menée ou quelle action doit être entreprise.

Si l'indice de confiance global évalué TL(SLi) est supérieur au seuil THTL(SLi) (réponse non à l'étape test E50), aucune action de mitigation n'est entreprise (étape E70). Le module C-SID*(SLi) peut en informer les autres modules SID(SLi) associés à la tranche SLi, notamment ceux à l'origine d'indices de confiance locaux faibles, et leur envoyer des informations leur permettant de mettre à jour par exemple les attributs utilisés par leurs techniques de détection.

On note que d'autres approches peuvent être envisagées pour évaluer les indices de confiance locaux et global associés à une tranche de réseau. Par exemple, une approche telle que celle décrite dans le document de B. Niu et al.

intitulé "5G Network Slice Security Trust Degree Calculation Model", 3rd IEEE International Conference on Computer and Communications, Chengdu, China, 2017, pp. 1150-1157, peut être utilisée en variante.

L'invention propose ainsi une solution qui permet de garantir la sécurité de bout en bout de tranches de réseau, en s'appuyant sur une technique de calcul hybride combinant à la fois un calcul distribué d'indices de confiance locaux et un calcul centralisé d'un indice de confiance global pour chaque tranche du réseau. L'indice global calculé en est d'autant plus robuste et permet le cas échéant une action de mitigation adaptée à chaque tranche de réseau considérée.

**Revendications**

1. Système de surveillance (2) d'au moins une tranche (SL1,...,SL8) d'un réseau de communications (1) utilisant au moins un réseau d'accès, un réseau de périphérie et un réseau cœur, ledit système comprenant, pour chaque tranche, une pluralité de modules de détection d'intrusions (R-SID, E-SID, C-SID) configurés pour surveiller des éléments associés à ladite tranche et comportant au moins un premier module (R-SID) de détection d'intrusions au niveau du réseau d'accès, un deuxième module (E-SID) de détection d'intrusions au niveau du réseau de périphérie, et au moins un troisième module (C-SID) au niveau du réseau cœur, chacun desdits modules étant configuré pour fournir une information représentative d'un niveau de confiance local attribué à ladite tranche en fonction d'un comportement d'au moins un élément qu'il surveille, un dit troisième module (C-SID*) étant en outre configuré pour évaluer, à partir desdites informations fournies, un niveau de confiance global pour ladite tranche et à déclencher une action de mitigation d'une intrusion pour ladite tranche en fonction d'une valeur de ce niveau de confiance global.

2. Système de surveillance (2) selon la revendication 1 dans lequel ladite pluralité de modules de détection associée à ladite tranche comprend une pluralité de troisièmes modules (C-SID) associés respectivement à des fonctions réseau actives distinctes du réseau cœur.

3. Système de surveillance (2) selon la revendication 2 dans lequel ledit troisième module (C-SID*) configuré pour évaluer le niveau de confiance global est sélectionné parmi ladite pluralité de troisièmes modules en fonction de sa proximité au réseau d'accès et/ou au réseau de périphérie.

4. Système de surveillance (2) selon l'une quelconque des revendications 1 à 3 dans lequel le niveau de confiance global pour ladite tranche est une moyenne des niveaux de confiance locaux fournis par ladite pluralité de modules de détection.

5. Système de surveillance (2) selon l'une quelconque des revendications 1 à 4 dans lequel au moins un niveau de confiance local est évalué par un dit module de détection pour la dite tranche comme un ratio entre une soustraction d'un nombre de comportements normaux dudit au moins un élément surveillé par ce module de détection et d'un nombre d'intrusions affectant ledit au moins un élément surveillé par ce module de détection détectées sur une période de temps donnée, par une somme desdits nombres.

6. Système de surveillance (2) selon l'une quelconque des revendications 1 à 5 dans lequel ladite action de mitigation comprend, si la valeur du niveau de confiance global est inférieure à un seuil donné, une isolation de ladite tranche du réseau et/ou une éviction d'au moins un élément du réseau d'accès, du réseau de périphérie et/ou du réseau cœur identifiés comme ciblés par une intrusion.

7. Système de surveillance (2) selon l'une quelconque des revendications 1 à 6 dans lequel ledit premier module est configuré pour, sur détection d'une intrusion, signaler ladite intrusion détectée audit deuxième module et/ou à un dit premier module associé à une autre tranche utilisant ledit réseau d'accès.

8. Système de surveillance (2) selon l'une quelconque des revendications 1 à 7 dans lequel ledit deuxième module est configuré pour, sur détection d'une intrusion, signaler ladite intrusion détectée audit au moins un troisième module et/ou déclencher une action de mitigation au niveau du réseau d'accès et/ou du réseau de périphérie.

9. Système de surveillance (2) selon l'une quelconque des revendications 1 à 8 dans lequel au moins un dit module de détection est configuré pour exécuter au moins une action parmi une action d'analyse en profondeur, une action de notification, et/ou une action de mitigation lorsqu'il détecte qu'une probabilité d'exécuter ladite action est supérieure à un seuil déterminé.

10. Système de surveillance (2) selon la revendication 9 dans lequel ledit seuil est déterminé dynamiquement pour ledit module de détection en fonction d'un nombre de fausses détections réalisées par ledit module de détection.

11. Réseau de communications (1), configuré pour mettre en œuvre un découpage en tranches, ledit réseau de communications comprenant un système de surveillance selon l'une quelconque des revendications 1 à 10 configuré pour surveiller au moins une tranche dudit réseau.

12. Procédé de surveillance d'au moins une tranche (SL1,..,SL8) d'un réseau de communications (1) utilisant au moins un réseau d'accès, un réseau de périphérie et un réseau cœur, ledit procédé comprenant :

    - une étape de surveillance (E10) de ladite tranche par une pluralité de modules de détection d'intrusions configurés pour surveiller des éléments associés à ladite tranche et comportant au moins un premier module de détection d'intrusions au niveau du réseau d'accès, un deuxième module de détection d'intrusions au niveau du réseau de périphérie, et au moins un troisième module au niveau du réseau cœur ;
    - une étape de fourniture (E30), par chacun desdits modules (R-SID, E-SID, C-SID), d'une information représentative d'un niveau de confiance local attribué à ladite tranche en fonction d'un comportement d'au moins un élément surveillé par ledit module ;
    - une étape d'évaluation (E40), par un dit troisième module, à partir desdites informations fournies, d'un niveau de confiance global pour ladite tranche ; et
    - une étape de déclenchement (E60) d'une action de mitigation d'une intrusion pour ladite tranche en fonction d'une valeur de ce niveau de confiance global.

**Patentansprüche**

1. Überwachungssystem (2) zur Überwachung mindestens eines Slice (SL1, ..., SL8) eines Kommunikationsnetzwerks (1), das mindestens ein Zugangsnetzwerk, ein Edge-Netzwerk und ein Kernnetzwerk verwendet, wobei das System für jeden Slice eine Mehrzahl von Eindringerkennungsmodulen (R-SID, E-SID, C-SID) umfasst, die dazu ausgelegt sind, dem Slice zugeordnete Elemente zu überwachen, und mindestens ein erstes Modul (R-SID) zur Eindringerkennung auf Ebene des Zugangsnetzwerks, ein zweites Modul (E-SID) zur Eindringerkennung auf Ebene des Edge-Netzwerks und mindestens ein drittes Modul (C-SID) auf Ebene des Kernnetzwerks umfassen, wobei jedes der Module dazu ausgelegt ist, eine Information bereitzustellen, die für ein lokales Konfidenzniveau repräsentativ ist, das dem Slice in Abhängigkeit von einem Verhalten mindestens eines Element, das es überwacht, zugewiesen wird, wobei ein drittes Modul (C-SID*) ferner dazu ausgelegt ist, ausgehend von den bereitgestellten Informationen ein Gesamtkonfidenzniveau für den Slice zu bewerten und eine Aktion zur Eindämmung eines Eindringens in Abhängigkeit von einem Wert dieses Gesamtkonfidenzniveaus auszulösen.

2. Überwachungssystem (2) nach Anspruch 1, wobei die dem Slice zugeordnete Mehrzahl von Erkennungsmodulen eine Mehrzahl von dritten Modulen (C-SID) umfasst, die jeweils unterschiedlichen aktiven Netzwerkfunktionen des Kernnetzwerks zugeordnet sind.

3. Überwachungssystem (2) nach Anspruch 2, wobei das dritte Modul (C-SID*), das dazu ausgelegt ist, das Gesamtkonfidenzniveau zu bewerten, aus der Mehrzahl von dritten Modulen in Abhängigkeit von seiner Nähe zu dem Zugangsnetzwerk und/oder zu dem Edge-Netzwerk ausgewählt wird.

4. Überwachungssystem (2) nach einem der Ansprüche 1 bis 3, wobei das Gesamtkonfidenzniveau für den Slice ein Mittelwert der lokalen Konfidenzniveaus ist, die von der Mehrzahl von Erkennungsmodulen bereitgestellt werden.

5. Überwachungssystem (2) nach einem der Ansprüche 1 bis 4, wobei mindestens ein lokales Konfidenzniveau von einem Erkennungsmodul für den Slice als ein Quotient aus einer Subtraktion einer Anzahl von normalen Verhaltensweisen des mindestens einen von diesem Erkennungsmodul überwachten Elements und einer Anzahl von Eindringvorgängen, die das mindestens eine von diesem Erkennungsmodul überwachten Element betreffen und über einen gegebenen Zeitraum detektiert werden, und aus einer Summe der Anzahlen bewertet wird.

6. Überwachungssystem (2) nach einem der Ansprüche 1 bis 5, wobei die Aktion zur Eindämmung, wenn der Wert des Gesamtkonfidenzniveaus kleiner als ein gegebener Schwellenwert ist, eine Isolierung des Slice von dem Netzwerk und/oder eine Vermeidung mindestens eines Elements des Zugangsnetzwerks, des Edge-Netzwerks und/oder des Kernnetzwerk, die als Ziele eines Eindringens identifiziert werden, umfasst.

7. Überwachungssystem (2) nach einem der Ansprüche 1 bis 6, wobei das erste Modul dazu ausgelegt ist, bei Erkennung eines Endringens das erkannte Eindringen an das zweite Modul und/oder an ein erstes Modul, das einem anderen Slice zugeordnet ist, der das Zugangsnetzwerk verwendet, zu signalisieren.

8. Überwachungssystem (2) nach einem der Ansprüche 1 bis 7, wobei das zweite Modul dazu ausgelegt ist, bei Erkennung eines Eindringens das erkannte Eindringen an das mindestens eine dritte Modul zu signalisieren und/oder eine Aktion zur Eindämmung auf Ebene des Zugangsnetzwerks und/oder des Edge-Netzwerks auszulösen.

9. Überwachungssystem (2) nach einem der Ansprüche 1 bis 8, wobei mindestens ein Erkennungsmodul dazu ausgelegt ist, mindestens eine Aktion unter einer Aktion zur Tiefenanalyse, einer Benachrichtigungsaktion und/oder einer Aktion zur Eindämmung auszuführen, wenn es erkennt, dass eine Wahrscheinlichkeit, die Aktion auszuführen, größer als ein bestimmter Schwellenwert ist.

10. Überwachungssystem (2) nach Anspruch 9, wobei der Schwellenwert für das Erkennungsmodul in Abhängigkeit von einer Anzahl von Fehlerkennungen, die von dem Erkennungsmodul ausgeführt wurden, dynamisch bestimmt wird.

11. Kommunikationsnetzwerk (1), das dazu ausgelegt ist, ein Slicing durchzuführen, wobei das Kommunikationsnetzwerk ein Überwachungssystem nach einem der Ansprüche 1 bis 10 umfasst, das dazu ausgelegt ist, mindestens einen Slice des Netzwerks zu überwachen.

12. Verfahren zur Überwachung mindestens eines Slice (SL1, ..., SL8) eines Kommunikationsnetzwerks (1), das mindestens ein Zugangsnetzwerk, ein Edge-Netzwerk und ein Kernnetzwerk verwendet, wobei das Verfahren Folgendes umfasst:

    - einen Schritt des Überwachens (E10) des Slice durch eine Mehrzahl von Eindringerkennungsmodulen, die dazu ausgelegt sind, dem Slice zugeordnete Elemente zu überwachen, und mindestens ein erstes Modul zur Eindringerkennung auf der Ebene des Zugangsnetzwerks, ein zweites Modul zur Eindringerkennung auf Ebene des Edge-Netzwerks und mindestens ein drittes Modul auf Ebene des Kernnetzwerk umfassen;
    - einen Schritt des Bereitstellens (E30), durch jedes der Module (R-SID, E-SID, C-SID), einer Information, die für ein lokales Konfidenzniveau repräsentativ ist, das dem Slice in Abhängigkeit von einem Verhalten mindestens eines von dem Modul überwachten Elements zugewiesen wird;
    - einen Schritt des Bewertens (E40), durch ein drittes Modul, ausgehend von den bereitgestellten Informationen, eines Gesamtkonfidenzniveaus für den Slice; und
    - einen Schritt des Auslösens (E60) einer Aktion zur Eindämmung eines Eindringens für den Slice in Abhängigkeit von einem Wert dieses Gesamtkonfidenzniveaus.

## Claims

1. Monitoring system (2) for monitoring at least one slice (SL1, ..., SL8) of a communications network (1) using at least one access network, an edge network and a core network, said system comprising, for each slice, a plurality of intrusion detection modules (R-SID, E-SID, C-SID) configured to monitor elements associated with said slice and comprising at least a first module (R-SID) for detecting intrusions at the access network level, a second module (E-SID) for detecting intrusions at the edge network level, and at least a third module (C-SID) at the core network level, each of said modules being configured to provide a piece of information representative of a local confidence level assigned to said slice according to a behaviour of at least one element that it monitors, a said third module (C-SID*) also being configured to evaluate, from said information provided, a global confidence level for said slice and to trigger an intrusion mitigation action for said slice according to a value of this global confidence level.

2. Monitoring system (2) according to Claim 1, wherein said plurality of detection modules associated with said slice comprises a plurality of third modules (C-SID) associated, respectively, with separate active network functions of the core network.

3. Monitoring system (2) according to Claim 2, wherein said third module (C-SID*) configured to evaluate the global confidence level is selected from among said plurality of third modules on the basis of its proximity to the access network and/or to the edge network.

4. Monitoring system (2) according to any one of Claims 1 to 3, wherein the global confidence level for said slice is a mean of the local confidence levels provided by said plurality of detection modules.

5. Monitoring system (2) according to any one of Claims 1 to 4, wherein at least one local confidence level is evaluated by a said detection module for said slice as a ratio between a subtraction of a number of normal behaviours of said at least one element monitored by this detection module and of a number of intrusions affecting said at least one element monitored by this detection module detected over a given period of time, by a sum of said numbers.

6. Monitoring system (2) according to any one of Claims 1 to 5, wherein said mitigation action comprises, if the value of the global confidence level is below a given threshold, the isolation of said slice of the network and/or the removal of at least one element of the access network, of the edge network and/or of the core network identified as being targeted by an intrusion.

7. Monitoring system (2) according to any one of Claims 1 to 6, wherein said first module is configured so that, on detecting an intrusion, it signals said detected intrusion to said second module and/or to a said first module associated with another slice using said access network.

8. Monitoring system (2) according to any one of Claims 1 to 7, wherein said second module is configured so that, on detecting an intrusion, it signals said detected intrusion to said at least one third module and/or triggers a mitigation action at the level of the access network and/or of the edge network.

9. Monitoring system (2) according to any one of Claims 1 to 8, wherein at least one said detection module is configured to execute at least one action from among a deep analysis action, a notification action, and/or a mitigation action when it detects that a probability of executing this action is above a specified threshold.

10. Monitoring system (2) according to Claim 9, wherein said threshold is determined dynamically for said detection module on the basis of a number of false detections performed by said detection module.

11. Communications network (1) configured to implement network slicing, said communications network comprising a monitoring system according to any one of Claims 1 to 10, configured for monitoring at least one slice of said network.

12. Method for monitoring at least one slice (SL1, ..., SL8) of a communications network (1) using at least an access network, an edge network and a core network, said method comprising:

- a step of monitoring (E10) said slice by means of a plurality of intrusion detection modules configured to monitor elements associated with said slice and comprising at least a first module for detecting intrusions at the access network level, a second module for detecting intrusions at the edge network level, and at least a third module at the core network level;
- a step of providing (E30), by means of each of said modules (R-SID, E-SID, C-SID), a piece of information representative of a local confidence level assigned to said slice according to a behaviour of at least one element monitored by said module;
- a step of evaluating (E40), by means of a said third module, from said information provided, a global confidence level for said slice; and
- a step of triggering (E60) an intrusion mitigation action for said slice according to a value of this global confidence level.

[Fig 1]

[Fig 2]

[Fig 3]

R-SID, E-SID, C-SID

C-SID*

Figure 3a

Figure 3b

[Fig 4]

```
                          ┌─────────────────────┐
                          │    MONITOR SLi      │ ⟵ E10
                          └─────────────────────┘
                                    │
                                    ▼
                          ┌─────────────────────┐
                          │   EVAL TLlocj(x,SLi),│
                          │ x=R-SID,E-SID,C-SID, │ ⟵ E20
                          │      j=1,...,K       │
                          └─────────────────────┘
                                    │
                                    ▼
                          ┌─────────────────────┐
                          │   PROV TLlocj(x,SLi),│
                          │ x=R-SID,E-SID,C-SID, │ ⟵ E30
                          │      j=1,...,K       │
                          └─────────────────────┘
                                    │
                                    ▼
                          ┌─────────────────────┐
                          │     EVAL TL(SLi)     │ ⟵ E40
                          └─────────────────────┘
                                    │
                                    ▼
                                                    E50
            non              ◇ TL(SLi)<THTL(SLi) ? ◇
         ┌──────────────────◇                      ◇
         │                    ◇                    ◇
         │                        │
         │                        │ oui
         ▼                        ▼
    ┌─────────┐             ┌─────────┐
    │  STOP   │ ⟵ E70       │  MITIG  │ ⟵ E60
    └─────────┘             └─────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019115173 A1

**Littérature non-brevet citée dans la description**

- *3GPP TS 23.501 v15.7.0*, September 2019
- **Y. KHETTAB et al.** Virtual Security as a Service for 5G Verticals. *IEEE Wireless Communications and Networking Conference*, 2018
- **J. NI et al.** Efficient, Secure and Privacy-preserving Network Slicing for 5G-enabled IoT Systems. *IEEE Journal on Selected Areas in Communications*, 2018, vol. 36 (3)
- **B. NIU et al.** 5G Network Slice Security Trust Degree Calculation Model. *3rd IEEE International Conference on Computer and Communications, Chengdu, China*, 2017, 1150-1157